# EUROPÄISCHE PATENTSCHRIFT

(11) **EP 3 450 359 B1**
(45) Veröffentlichungstag und Bekanntmachung des Hinweises auf die Patenterteilung: **31.08.2022**
(21) Anmeldenummer: 18185065.2
(22) Anmeldetag: 23.07.2018
(51) Int. Cl.: B65G 47/08, B65G 47/71, B65G 47/32, B65G 47/90

(54) **VORRICHTUNG UND VERFAHREN ZUM UMGANG MIT IN MINDESTENS EINER REIHE HINTEREINANDER BEWEGTEN STÜCKGÜTERN**
DEVICE AND METHOD FOR HANDLING PIECE GOODS MOVED ONE BEHIND THE OTHER IN AT LEAST ONE ROW
DISPOSITIF ET PROCÉDÉ DE MANIPULATION D'AU MOINS UNE RANGÉE DE MARCHANDISES EN MOUVEMENT LES UNES DERRIÈRE LES AUTRES

(30) Priorität: 30.08.2017 DE 102017215122
(43) Veröffentlichungstag der Anmeldung: 06.03.2019
(73) Patentinhaber: Krones Aktiengesellschaft, 93073 Neutraubling (DE)
(72) Erfinder: KIRZINGER, Johannes, 93073 Neutraubling (DE); WINZINGER, Frank, 93073 Neutraubling (DE)
(74) Vertreter: Benninger, Johannes

(56) Entgegenhaltungen:
- EP-A1- 3 205 609
- WO-A1-2010/108750
- WO-A1-2011/158100
- WO-A1-2015/036119
- WO-A1-2016/012171
- WO-A1-2016/202532
- WO-A1-2018/064259
- DE-A1-102005 039 842

## Beschreibung

Die vorliegende Erfindung betrifft eine Vorrichtung und ein Verfahren zum Umgang mit in mindestens einer Reihe hintereinander bewegten Stückgütern gemäß den Merkmalen der unabhängigen Ansprüche 1 und

Bekannte Anlagen zum Verteilen oder Gruppieren von Stückgütern wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, eine Ausrichtung und/oder ein Drehen einzelner Stückgüter oder Gebinde, um diese in eine geeignete räumliche Anordnung zu bringen.

Beispielsweise erfolgt in einem Einteilungsmodul das Abtrennen von Gruppen umfassend jeweils mindestens zwei direkt hintereinander oder nebeneinander angeordneter Stückgüter. Daran anschließend sind ein Drehmodul und ein Verteilmodul angeordnet, wobei in dem Drehmodul die gewünschte Ausrichtung der als Gruppe abgetrennten mindestens zwei Stückgüter erzeugt wird und daran anschließend im Verteilmodul die für eine nachfolgende Bearbeitung notwendige Teilung der Stückgüter durch Beabstandung derselben voneinander erzeugt wird. Alternativ können auch erst eine Verteilung in einem Verteilmodul und nachfolgend eine Drehung der vereinzelten Stückgüter in einem Drehmodul erfolgen.

In aktuellen Abfüll- und Verpackungslinien werden unterschiedliche Verfahren zum Drehen und Verteilen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind. Derartige Greifvorrichtungen sind etwa aus der EP 2 388 216 B1 bekannt.

Eine weitere Möglichkeit in Form eines Parallelkinematik-Roboters zum Erfassen und Bewegen von Stückgütern und ein Verfahren zum Bilden einer Neuorientierung aus einer Vielzahl an Stückgütern beschreibt die Offenlegungsschrift DE 10 2015 223 521. Die zu dem Parallelkinematik-Roboter zugeführten Stückgüter sind beispielsweise zueinander beabstandet und werden einzeln vom Parallelkinematik-Roboter erfasst. Um die bestimmte Formierung aus mehreren Stückgütern zu bilden, wird mindestens ein für die Formierung vorgesehenes Stückgut mittels des Parallelkinematik-Roboters um eine vertikale Achse gedreht.

Die Offenlegungsschrift DE 10 2015 118 248 A1 offenbart eine Anlage zur Ausführung von Abfolgen von Umgängen mit Artikeln, die mehrere zusammenwirkende Vorrichtungen umfasst, insbesondere eine robotergestützte Gebinde-Dreh-Verteilvorrichtung. Diese umfasst vorzugsweise mindestens ein Werkzeug, welches mit Hilfe eines unter dem Begriff Roboterarm zusammengefassten Manipulators innerhalb eines Arbeitsraums positioniert und beispielsweise entsprechend einer erforderlichen Bewegung zur Ausführung einer Manipulation und/oder einer Verbringung und/oder einer Behandlung eines oder mehrerer Artikel bewegt werden kann. Die Bewegung, die dabei vermittels des Roboterarms ausgeführt wird, kann wie im Fall einer Drehung um eine oder mehrere Achsen eine punktförmige, oder im Fall einer Translationsbewegung eine geradlinige oder zwei- oder dreidimensional gekrümmt verlaufende Bewegungsbahn vorsehen.

Weiterhin offenbart die Patentschrift DE 102 19 129 B4 eine Vorrichtung zum Drehen und Verteilen oder Zusammenführen von Packs, die in mindestens einer Zuteilbahn zugeführt und in mindestens einer zu der oder den Zuteilbahnen parallelen Auslaufbahn in einer um eine vertikale Achse um 90 Grad gedrehten Anordnung abgeführt werden. Die Vorrichtung weist einen um eine vertikale Achse drehbar gelagerten Greifkopf zum gleichzeitigen Erfassen von mindestens zwei Packs auf. Weiterhin umfasst die Vorrichtung einen steuerbaren Antrieb zum Verdrehen des Greiferkopfes, der zum Zentrieren der Packs zwei abstandsveränderliche Bügel aufweist.

Das Dokument EP 3 205 609 A1 offenbart die Merkmale des Oberbegriffs des Anspruchs 1. Z

Die Aufgabe der Erfindung besteht darin, die notwendige Anordnung von Stückgütern relativ zueinander für nachfolgende Bearbeitungsvorrichtungen besonders zeitsparend durchzuführen, insbesondere die Herstellung einer Anordnung der Stückgüter, bei der diese gedreht und in ihrem Abstand zueinander angepasst werden müssen.

Die obige Aufgabe wird durch eine Vorrichtung zum Umgang mit in mindestens einer Reihe von hintereinander bewegten Stückgütern und ein Verfahren zum Umgang mit in mindestens einer Reihe hintereinander bewegten Stückgütern gelöst, die die Merkmale in den unabhängigen Patentansprüchen umfassen. Weitere vorteilhafte Ausgestaltungen werden durch die Unteransprüche beschrieben.

Die Vorrichtung zum Umgang mit in mindestens einer Reihe hintereinander bewegten Stückgütern umfasst mindestens einen Manipulator für die Stückgüter. Die Vorrichtung umfasst wenigstens eine Transporteinrichtung, über welche unmittelbar aufeinanderfolgende Stückgüter der Reihe ohne Beabstandung ununterbrochend fortlaufend in einer Transportrichtung als mindestens eine geschlossene Formation in einen Erfassungsbereich des mindestens einen Manipulators transportiert werden können. Bei den Stückgütern kann es sich um in einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut bilden. Die in Reihe hintereinander bewegten Stückgüter können dabei je nach Anforderung von nachfolgenden Handhabungsvorrichtungen gleich oder unterschiedlich ausgebildet sein.

Die in einer Reihe ohne Abstände bewegten und/oder zu einem - insbesondere Manipulationsbereich bzw. Erfassungsbereich genannten - Bereich beförderten, mindestens zwei unmittelbar aufeinanderfolgenden Stückgüter werden als geschlossene Formation transportiert. Mit dem Begriff der geschlossenen Formation ist eine weitgehend lückenlose Aufeinanderfolge von Stückgütern gemeint, die hintereinander transportiert werden.

Der mindestens eine Manipulator ist zum klemmenden und/oder kraft- und/oder formschlüssigen Entgegennehmen mindestens zweier Stückgüter von der mittels der wenigstens einen Transporteinrichtung in seinen Erfassungsbereich transportierten mindestens einen geschlossenen Formation ausgebildet, sowie zum daran anschließenden Abtrennen und Überführen dieser mindestens zwei Stückgüter in eine Zielposition und/oder Zielausrichtung innerhalb des Erfassungsbereichs des Manipulators, zur Anordnung der Stückgüter auf einer dem Manipulator zugeordneten Horizontalfördereinrichtung.

Der mindestens eine Manipulator ist weiterhin zum Drehen der mindestens zwei erfassten Stückgüter um eine vertikale Achse und zu einer Veränderung eines Abstands zwischen den wenigstens zwei Stückgütern ausgebildet. Insbesondere kann vorgesehen sein, dass die mindestens zwei erfassten Stückgüter unter Drehung um etwa 90 Grad oder um etwa 270 Grad in die definierte relative Zielposition und/oder Zielausrichtung gebracht werden. Die Drehung wird dabei insbesondere über den Manipulator realisiert.

Bei dem ebenfalls beschriebenen Verfahren ist insbesondere vorgesehen, dass die wenigstens zwei von der geschlossenen Formation klemmend und/oder kraft- und/oder formschlüssig abgegriffenen Stückgüter von der Formation räumlich abgetrennt und unter Drehung in eine definierte relative Zielposition und/oder Zielausrichtung gegenüber den nachfolgenden Stückgütern der geschlossenen Formation gebracht werden, wobei in der definierten relativen Zielposition und/oder Zielausrichtung ein Abstand zwischen den wenigstens zwei transportierten Stückgütern gegenüber der ursprünglichen Anordnung der wenigstens zwei erfassten Stückgüter vor dem Erfassen und Abtrennen von der mindestens einen geschlossenen Formation verändert ist. Dabei ist vorgesehen, dass die Abstandsveränderung zwischen dem Erfassen und Abtrennen der wenigstens zwei Stückgüter von der mindestens einen geschlossenen Formation und dem Erreichen und Freigeben der mindestens zwei Stückgüter in der definierten relativen Zielposition und/oder Zielausrichtung durchgeführt wird.

Zur Realisierung der vorbeschriebenen Drehung und Abstandsveränderung umfasst der Manipulator erfindungsgemäß mindestens einen Greiferkopf zum Erfassen der mindestens zwei Stückgüter. Dieser ist vorzugsweise um eine vertikale Achse drehbar an einem Drehgelenk angeordnet und umfasst weiterhin Mittel, um die Abstandsveränderung zwischen den wenigstens zwei erfassten Stückgütern bewirken zu können. Der Greiferkopf umfasst mindestens ein Paar gegeneinander zustellbare Klemmbacken, zwischen denen die mindestens zwei Stückgüter geklemmt und dadurch entsprechend durch den Manipulator zur Zielposition bewegt werden können.

Erfindungsgemäß besteht jede der beiden Klemmbacken aus mindestens zwei fluchtenden Teilbereichen, die innerhalb der Flucht zueinander abstandsvariabel ausgebildet sind. Besonders bevorzugt korrespondiert die Anzahl der Teilbereiche jeder Klemmbacke mit der Anzahl der zu erfassenden und unter Drehung und Abstandsveränderung in eine Zielposition und Zielanordnung verbringbaren Stückgüter.

In einer ersten Arbeitsposition des Manipulators sind die mindestens zwei fluchtenden Teilbereiche innerhalb der Flucht in einem ersten Abstand zueinander angeordnet, so dass der mindestens eine Greiferkopf zur Entgegennahme der mindestens zwei Stückgüter ausgebildet ist. Dagegen sind die mindestens zwei fluchtenden Teilbereiche in einer zweiten Arbeitsposition des Manipulators in einem, gegenüber dem ersten Abstand veränderten, zweiten Abstand angeordnet, so dass der mindestens eine Greiferkopf zum Freigeben der mindestens zwei Stückgüter in der Zielposition und/oder Zielausrichtung und mit verändertem Abstand zwischen den beiden Stückgütern ausgebildet ist.

Beispielsweise kann mit einem geeigneten Manipulator ein Verfahren durchgeführt werden, bei dem Stückgüter in n Reihen in einer Transportrichtung über mindestens eine Transporteinrichtung zugeführt werden. Von jeder dieser Stückgüter zuführenden n Reihen wird eine Anzahl von mindestens n+1 Stückgütern erfasst und unter Drehung und Abstandsveränderung in eine Anordnung von mindestens n+1 abführenden Reihen von Stückgütern überführt. Hierzu ist beispielsweise ein Manipulator notwendig, der n Greiferköpfe mit jeweils paarweise angeordneten Klemmbacken umfasst, wobei jede Klemmbacke zum Abgreifen von n+1 Stückgütern aus n+1 zueinander in einer Flucht abstandsvariabel ausgebildeten Teilbereichen besteht. Die Teilbereiche einer Klemmbacke können in der ersten Arbeitsposition in einem geringen Abstand, beispielsweise in einem gegen Null gehenden Abstand, angeordnet sein, um jeweils n+1 Stückgüter der geschlossenen Formation der jeweiligen Reihe abzugreifen. In der zweiten Arbeitsposition werden die Teilbereiche der Klemmbacken in einem zweiten Abstand auseinander gezogen, der insbesondere der Teilung entspricht, mit der die gedrehten und in n+1 abführenden Reihen angeordneten Stückgüter nunmehr in Transportrichtung weiter transportiert und der weiteren Verarbeitung zugeführt werden. Mit diesem Verfahren und einem geeignet ausgebildeten Manipulator können beispielsweise in zwei Reihen ankommende Stückgüter gleichzeitig gedreht und auf drei abführende Reihen aufgeteilt werden, wobei insbesondere ein geringerer oder ein größerer Abstand zwischen den Stückgütern der nunmehr neu erstellten abführenden Reihen eingestellt wird, wie er von den nachfolgenden Bearbeitungsmodulen benötigt wird.

Alternativ kann ein Verfahren durchgeführt werden, bei dem ebenfalls Stückgüter in n Reihen in einer Transportrichtung über mindestens eine Transporteinrichtung zugeführt werden, jedoch von jeder zuführenden Reihe eine Anzahl von maximal n-1 Stückgüter erfasst und unter Drehung und Abstandsveränderung in eine Anordnung von maximal n-1 abführenden Reihen von Stückgütern überführt wird. Hierbei gilt, dass die Anzahl der maximal n-1 abführenden Reihen ≥ 1 ist. Werden beispielsweise Stückgüter in zwei Reihen jeweils als geschlossene Formation zugeführt, kann ein Manipulator mit zwei Klemmbackenpaaren jeweils ein Stückgut jeder Reihe abgreifen und unter Drehung um 90 Grad oder um 270 Grad in eine Anordnung überführen, bei der die beiden Stückgüter der beiden zuführenden Reihen eine neue abführende Reihe parallel oder fluchtend zur zuführenden Transportrichtung bilden. Weiterhin kann der Abstand zwischen den beiden Stückgütern verändert werden, indem der Abstand zwischen den beiden Klemmbackenpaaren des Manipulators zueinander vergrößert oder verkleinert wird. Wenn hierbei von Drehungen um 90 Winkelgraden oder von 270 Winkelgraden die Rede ist, so ist damit jeweils eine Drehung um vertikale Achsen bzw. um in etwa vertikal orientierte Drehachsen gemeint.

Weiterhin kann vorgesehen sein, dass der Manipulator mindestens ein austauschbares Formatteil ist oder umfasst. Bei einem Produktwechsel kann das mindestens eine Formatteil ausgetauscht und somit die Vorrichtung an die geänderten Produktionsbedingungen angepasst werden. Insbesondere kann der mindestens eine Greiferkopf ausgetauscht werden. Beispielsweise kann die Anzahl der Greiferköpfe und somit die Anzahl der Klemmbackenpaare an die Anzahl der zuführenden Stückgutreihen angepasst werden. Zudem müssen die Klemmbacken die geeignete Anzahl von Teilbereichen umfassen. Auch kann eine Größenänderung der zu bearbeitenden Stückgüter die Verwendung eines größeren oder kleineren Greiferkopfes notwendig machen.

Gemäß einer Ausführungsform der Erfindung kann vorgesehen sein, dass dem mindestens einen Mittel des Manipulators zum Drehen der mindestens zwei erfassten Stückgüter um eine vertikale Achse und dem mindestens einen Mittel des Manipulators zur Abstandsveränderung der wenigstens zwei Stückgüter voneinander jeweils ein eigener Antrieb zugeordnet ist. Die Antriebe können vorzugsweise unabhängig voneinander angesteuert und betrieben werden. In diesem Fall können die Drehung und die Abstandsveränderung der wenigstens zwei Stückgüter unabhängig voneinander erfolgen. Alternativ könnten die beiden Antriebe auch über eine Steuerungseinrichtung elektronisch gekoppelt sein.

Gemäß einer alternativen Ausführungsform kann auch eine Kopplung, insbesondere eine mechanische Kopplung, des mindestens einen Mittels des Manipulators zum Drehen der mindestens zwei Stückgüter um eine vertikale Achse und des mindestens einen Mittels des Manipulators zur Veränderung des Abstands zwischen den wenigstens zwei Stückgütern vorgesehen sein. In diesem Fall ist nur ein Antrieb notwendig, um die Drehung und die Abstandsveränderung zwischen dem Erfassen der mindestens zwei Stückgüter und dem Anordnen und Freigeben der mindestens zwei Stückgüter in der neuen Zielposition und/oder Zielanordnung zu realisieren. Die Drehbewegung und die Veränderung des Abstands zwischen den wenigstens zwei Stückgütern erfolgt vorzugsweise simultan. Während der Drehung des Manipulators fahren die Teilbereiche der Klemmbacken auseinander, um die Teilung zwischen den Stückgütern gemäß der Anzahl der abführenden Reihen einzustellen. Oder aber die mindestens zwei Greiferköpfe bewegen sich aufeinander zu oder voneinander weg, um die Teilung zwischen den Stückgütern gemäß der Anzahl der abführenden Reihen einzustellen.

Weiterhin kann vorgesehen sein, dass die Vorrichtung mindestens eine Erfassungseinrichtung zur Überwachung des Zulaufs der in mindestens einer Reihe in den Erfassungsbereich des Manipulators einlaufenden Stückgüter umfasst. Die Erfassungseinrichtung ist mit dem Manipulator gekoppelt, insbesondere elektronisch über eine Steuerungseinrichtung. Ein Bewegungsablauf des mindestens einen Manipulators ist aufgrund der von der Erfassungseinrichtung ermittelten Daten steuerbar. Insbesondere kann dadurch sichergestellt werden, dass der Manipulator die einlaufenden Stückgüter sicher und korrekt abgreifen kann. Solche Erfassungseinrichtungen werden beispielsweise in den Anmeldungen mit den Aktenzeichen DE 10 2016 213 400.0 und DE 10 2016 124 250.0 beschrieben, deren Inhalt hiermit in diese Anmeldung aufgenommen wird und deren Inhalt dem Fachmann beim Lesen der vorliegenden Anmeldung als bekannt gelten soll.

Vorzugsweise wird der mindestens eine Manipulator oder Teile des mindestens einen Manipulators durch einen Tripoden gebildet, d.h. eine parallelkinematische Bewegungsmaschine mit drei Antriebselementen und drei Freiheitsgraden im Raum. Ein solcher Tripod oder Parallelkinematik-Roboter weist insbesondere drei Schwenkarme bestehend aus einem Oberarmteil und einem Unterarmteil auf. Die freien Enden der Oberarmteile sind an einer Aufhängung des Manipulators angeordnet und die freien Enden der Unterarme sind an einem sogenannten Tool- Center-Point angeordnet, an dem auch der mindestens eine Greiferkopf des Manipulators über eine Basis angeordnet ist. Hierbei kann vorgesehen sein, dass zwischen der Basis und dem Tool- Center-Point drei Wellen zum Antreiben des Greiferkopfes angeordnet sind, wobei eine Welle zum Greifen der Stückgüter, eine Welle zum Drehen des Greiferkopfes und eine Welle zur Veränderung des Abstands zwischen den Teilbereichen der Klemmbacken ausgebildet ist. Eine alternative Ausführungsform, bei der Drehbewegung und die Veränderung des Abstands zwischen den wenigstens zwei Stückgütern miteinander gekoppelt sind, kommt mit zwei Wellen aus.

Zusätzlich zu der Drehbewegung und der Abstandsveränderung kann der Manipulator zwischen dem Erfassen und dem Freigeben der mindestens zwei Stückgüter noch eine seitliche Versatzbewegung ausführen, so dass der Manipulator beim Freigeben der Stückgüter nicht fluchtend zur Transportrichtung, sondern seitlich zu dieser versetzt angeordnet ist. Dies kann beispielsweise sinnvoll sein, wenn Stückgüter von einer geringen Anzahl zuführender Reihen auf eine deutlich höhere Anzahl abführender Reihen verteilt werden sollen.

Mit der vorliegenden Vorrichtung und dem Verfahren können bei der Bearbeitung von Stückgütern, insbesondere im Rahmen eines sogenannten Dreh- und Verteilsystems oder -moduls, Kosten eingespart werden, da zwei bisher über unterschiedliche Einrichtungen realisierte Bewegungsabläufe, nämlich Drehen von Stückgütern und Veränderung mindestens eines Abstands zwischen mindestens zwei Stückgütern nunmehr in einem Verfahrensschritt durch einen Manipulator durchgeführt werden können. Dadurch ist die Zeit für die Bearbeitung der Stückgüter verkürzt, zudem ist ein kompakteres Layout der gesamten Anlage möglich.

Das Verfahren umfasst die Merkmale der zuvor beschriebenen Vorrichtung.

Ebenfalls kann die Vorrichtung alternativ oder zusätzlich einzelne oder mehrere Merkmale und/oder Eigenschaften des beschriebenen Verfahrens aufweisen. Damit ist klargestellt, dass alle Aspekte und Ausführungsvarianten und/oder Wirkungen, die im Zusammenhang mit der erfindungsgemäßen Vorrichtung bei der Beschreibung oder auch bei den Anspruchsdefinitionen zur erfindungsgemäßen Vorrichtung beschrieben sind, gleichermaßen für das erfindungsgemäße Verfahren gelten sollen. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Die nachfolgenden Ausführungen fassen nochmal einige Aspekte der zuvor bereits in verschiedenen Ausführungsvarianten erläuterten erfindungsgemäßen Vorrichtung sowie des erfindungsgemäßen Verfahrens zum Umgang mit in mindestens einer Reihe hintereinander bewegten Stückgütern zusammen, konkretisieren einige Aspekte, sollen jedoch nicht im Widerspruch zu den bereits gemachten Ausführungen gesehen werden. Die folgenden Ausführungen sollen vielmehr in Zusammenschau mit den vorher gemachten Ausführungen gesehen werden, bei Zweifeln ggf. als speziellere Ausführungsvarianten oder Abwandlungen. Die erfindungsgemäße Vorrichtung kann dabei wahlweise für eine einbahnige oder eine mehrbahnige Verarbeitung von Stückgütern ausgelegt sein.

Im Folgenden wird zur Verdeutlichung zumindest einiger der erfindungswesentlichen Aspekte ein zeitlicher Ablauf eines Ausführungsbeispiels eines Verfahrens zum Umgang mit in einer Reihe hintereinander bewegten Stückgütern durch eine Handhabungsvorrichtung erläutert. Diese Handhabungsvorrichtung kann insbesondere ein Dreh- und Verteilmodul mit einem Manipulator umfassen. Das Dreh- und Verteilmodul mit dem Manipulator kann auch als Gruppiermodul zur Anordnung von Stückgütern gemäß einem vorgegebenen Lagenschema in Lagen oder Teillagen verwendet werden. Die Handhabungsvorrichtung umfasst typischerweise eine erste Transporteinrichtung, über welche unmittelbar aufeinanderfolgende Stückgüter in einer ersten Reihe unterbrechungsfrei und/oder mit kontinuierlicher Transportgeschwindigkeit in einen Erfassungsbereich des oder mindestens eines Manipulators der Handhabungsvorrichtung transportiert werden. Der Erfassungsbereich meint im vorliegenden Zusammenhang insbesondere den maximalen und/oder den jeweils programmgesteuert vorgegebenen Bewegungsraum des Manipulators. Der Erfassungsbereich bzw. dessen äußere räumliche Begrenzung kann hierbei größer sein, als es die Außengrenzen der Horizontalfördereinrichtung vorgeben, auf deren ungefähr horizontaler Oberseite die Stückgüter befördert und/oder mittels des Manipulators positioniert und/oder verschoben werden. Normalerweise jedoch ist der Erfassungsbereich des Manipulators der sinnvolle Bewegungsbereich, in dem sich zu erfassende Stückgüter befinden können, und/oder in dem die abzusetzenden Stückgüter positioniert werden können.

Stückgüter im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. sein, wobei normalerweise mehrere Artikel wie insbesondere Behälter, Flüssigkeits- und/oder Getränkebehälter zu Gebinden zusammengefasst sind.

Die solchermaßen charakterisierten Stückgüter werden auf der Transporteinrichtung ununterbrochen fortlaufend in einer Transportrichtung befördert. Die zugeführten Stückgüter werden direkt aneinandergrenzend hintereinander zugeführt, d.h. zwischen den Stückgütern der Reihe sind keine Abstände vorhanden. Man spricht in diesem Zusammenhang auch von einer sogenannten geschlossenen Formation. In einer nicht beanspruchten Alternative könnte vorgesehen sein, dass zwischen den Stückgütern der zuführenden Reihe jeweils definierte Abstände vorhanden sind. In diesem Fall wäre eine vorgeordnete Einrichtung notwendig, die diese Anordnung der Stückgüter innerhalb der Reihe ausbildet.

Die Transporteinrichtung ist beispielsweise mindestens ein Förderband, eine Förderkette oder mindestens eine andere geeignete Fördereinrichtung, auf der die Stückgüter im dargestellten Ausführungsbeispiel einreihig transportiert werden. Insbesondere kann die Transporteinrichtung durch ein endlos umlaufendes Förderband, eine endlos umlaufende Förderkette o. dgl. gebildet sein, so dass damit die Stückgüter zur Horizontalfördereinrichtung angeliefert und heranbefördert werden können.

Der Manipulator ist zum klemmenden und/oder formschlüssigen und/oder kraftschlüssigen Entgegennehmen von Stückgütern innerhalb des Erfassungsbereichs ausgebildet und ausgestattet. Der Manipulator kann im vorliegenden Beispiel etwa derart ausgestattet sein, dass er im Erfassungsbereich die jeweils zwei vordersten Stückgüter der Formation abgreifen kann, diese erfassten Stückgüter von der Formation abtrennt und unter Drehung um 90 Grad in eine definierte relative Zielposition und/oder Zielausrichtung gegenüber den nachfolgenden Stückgütern bringt. Zudem kann vorgesehen sein, dass durch den Manipulator vor der Freigabe der beiden Stückgüter in der Zielposition mit der neuen Zielausrichtung ein definierter Abstand zwischen den zwei Stückgütern ausgebildet wird. Dieser Abstand entspricht insbesondere einem Abstand zwischen den über mindestens einen Abförderer in zwei Reihen weiterbeförderten Stückgütern. Um diese Beabstandung zu bewirken, kann vorgesehen sein, dass dem Manipulator mindestens ein Antrieb zugeordnet ist, der eine gegenläufige Bewegung von Teilbereichen von beweglichen und gegeneinander zustellbaren Klemmbacken bewirkt. Alternativ kann auch jeder dieser Teilbereiche über einen eigens angesteuerten Antrieb verfahren werden.

Die durch den Manipulator gedrehten und voneinander beabstandeten Stückgüter sowie die in den Erfassungsbereich einlaufenden Stückgüter der Reihe werden innerhalb des Dreh- und Verteilmoduls auf der Horizontalfördereinrichtung ohne Unterbrechung und mit unveränderter Fördergeschwindigkeit weitertransportiert, und zwar vor dem Positionieren bzw. Erfassen durch den Manipulator sowie normalerweise auch wieder nach dem Erreichen der jeweiligen Zielposition.

Wie oben bereits erwähnt, ist dem Erfassungsbereich insbesondere die Horizontalfördereinrichtung zugeordnet, deren die Stückgüter tragende Oberfläche sich mit einer definierten Fördergeschwindigkeit bewegt. Insbesondere kann diese Fördergeschwindigkeit der Horizontalfördereinrichtung der Transportgeschwindigkeit der Transporteinrichtung entsprechen. Wahlweise können die Transportgeschwindigkeit und die Fördergeschwindigkeit auch geringfügig differieren, sofern gewährleistet werden kann, dass die ununterbrochene Förderung der Stückgüter zur Horizontalfördereinrichtung aufrechterhalten wird. Die in Reihe bzw. Formation über die Transporteinrichtung ankommenden Stückgüter können zumindest bei differierenden Geschwindigkeiten und durch den aufgrund der höheren Transportgeschwindigkeit ggf. entstehenden Staudruck der nachfolgenden Stückgüter auf die Horizontalfördereinrichtung übergeschoben und dort unterbrechungsfrei weiterbefördert werden. Allerdings ist es hierbei notwendig, diesen Staudruck durch geeignete Maßnahmen abzubauen, bspw. mittels eines gummierten Förderbandes der Horizontalfördereinrichtung und/oder mittels eines gummierten Förderbandes der Transporteinrichtung, wahlweise auch durch ein zwischen der Transporteinrichtung und der Horizontalfördereinrichtung befindliches sog. Bremsband, das durch eine die Stückgüter tragende Oberfläche mit besonders hohem Reibungskoeffizienten charakterisiert ist. Diese oder andere geeignete Maßnahmen sorgen für eine präzise Positionierung der jeweiligen Stückgüter am jeweiligen Erfassungsort im Erfassungsbereich, so dass eine präzise Übernahme durch den Manipulator gewährleistet werden kann. Es soll jedoch betont werden, dass solche Maßnahmen zum Abbau eines ggf. vorhandenen bzw. entstandenen Staudrucks nicht unter allen Umständen wünschenswert sind, auch wenn sie je nach gewählter Konfiguration der beweglichen Teile unverzichtbar bzw. sinnvoll anzuwenden sind.

Gemäß einer Ausführungsform kann vorgesehen sein, dass die Drehung der Stückgüter durch den Manipulator und die Beabstandung der Stückgüter durch den Manipulator gekoppelt sind.

Die bspw. durch einen Deltakinematik-Roboter gebildete Handhabungsvorrichtung ist bspw. ausgebildet zum Greifen, Drehen und Versetzen zu Gebinden zusammengefasster Getränkebehältnisse. Die Vorrichtung bzw. der Deltakinematik-Roboter kann/können jedoch ebenso auch zum Greifen, Drehen und Versetzen von beliebigen Artikeln oder Stückgütern eingesetzt werden. Der Handhabungsvorrichtung bzw. dem Deltakinematik-Roboter kann bspw. eine obere Aufhängung zugeordnet sein. An dieser oberen Aufhängung können bspw. drei bewegliche Stellarme über einen jeweils zugeordneten Antrieb dreh- oder schwenkbar befestigt sein. Die drehende Bewegung der Stellarme erfolgt hierbei derart, dass ihre Drehachsen innerhalb einer gemeinsamen Ebene angeordnet sind. Weiter bestehen die drei Stellarme aus wenigstens zwei relativ zueinander schwenkbaren Armabschnitten, wobei die unteren Armabschnitte bzw. Unterarme jeweils aus zwei parallel zueinander orientierten Gestängeabschnitten gebildet sind. Der jeweilige obere Armabschnitt bzw. Oberarm steht mit seinem jeweils zugeordneten Antrieb in Verbindung bzw. ist an seinem jeweils zugeordneten Antrieb angeflanscht. Zudem können die drei Stellarme unabhängig voneinander bewegt werden. Sämtliche Antriebe stehen hierzu mit einer Steuerungseinheit in Verbindung, welche die Bewegung der Stellarme vorgibt und die Antriebe ansteuert.

Am unteren Ende der drei Stellarme steht ein Manipulator bzw. Greiferkopf mit den drei Stellarmen derart in Verbindung, dass der Manipulator über eine Bewegung der drei Stellarme zur Handhabung der Stückgüter verfahren werden kann. Eine zentrale Steuerungseinheit gibt hierbei die Bewegung der Stellarme in Abhängigkeit von einer für den Manipulator vorgesehenen Position zum Greifen und Handhaben von Stückgütern vor. Sämtliche der drei Stellarme sind über einen Tragring mit einer Basis des Manipulators bzw. Greiferkopfes mechanisch gekoppelt. Die mechanische Verbindung bzw. Koppelung zwischen dem Tragring und der Basis des Manipulators ist derart, dass diese eine relative Verdrehung des Manipulators gegenüber dem Tragring erlaubt. Der Tragring kann auch als Tool-Center-Point der Vorrichtung bezeichnet werden.

Der Manipulator kann weiterhin einen an der Basis angeordneten Greiferkopf mit zwei gegeneinander zustellbaren Klemmbacken aufweisen, zwischen denen jedes zu erfassende Stückgut bzw. die zwei oder mehr jeweils zu erfassenden Stückgüter für das Abgreifen und Abtrennen von der Formation und die Drehung und Veränderung des Abstands geklemmt werden. Die Klemmbacken sind jeweils insbesondere zweiteilig aufgebaut und umfassen zwei Teilbereiche, die relativ zueinander in einer Flucht verfahren werden können. In einer ersten Arbeitsposition können die beiden Teilbereiche z.B. in einem ersten Abstand zueinander angeordnet sein, so dass sie zwei direkt hintereinander in Formation einlaufende Stückgüter gut von der Reihe abgreifen können. Zur Beabstandung der beiden erfassten Stückgüter kann zudem vorgesehen sein, dass die beiden Teilbereiche jeder Klemmbacke in einer Flucht auseinander bewegt werden können. Um einen Abstand zwischen den beiden Stückgütern auszubilden, wird zwischen den beiden Teilbereichen in einer zweiten Arbeitsposition ein zweiter Abstand erzeugt, der sich aus der Summe des Abstands zwischen den beiden Stückgütern und dem ersten Abstand zwischen den beiden Teilbereichen in der ersten Arbeitsposition ergibt.

Um die Stückgüter in ihrer vorgesehenen Zielposition und Zielanordnung freizugeben, werden die Klemmbacken auseinander bewegt. Vor dem Erfassen weiterer in Formation einlaufender Stückgüter wird der Manipulator wieder in die erste Arbeitsposition überführt, bei der der erste Abstand zwischen den beiden Teilbereichen jeder Klemmbacke eingestellt ist.

Es kann bspw. eine Kopplung der Drehbewegung und der Veränderung des Abstands vorgesehen sein. So kann mit einer Drehung des Manipulators zur Drehung der Stückgüter um 90 Grad gegenüber den nachfolgenden Stückgütern der Formation auch direkt die Veränderung des Abstands zwischen den beiden Teilbereichen der Klemmbacken erfolgen, wodurch die erfassten Stückgüter distanziert werden. Je weiter die Drehung fortgeschritten ist, desto größer ist sinnvollerweise auch die Veränderung des Abstands der beiden Teilbereiche. Insbesondere besteht bei einem Drehwinkel von 0 Grad ein erster Abstand zwischen den beiden Teilbereichen jeder Klemmbacke, während bei einem Drehwinkel von 90 Grad ein zweiter Abstand zwischen den beiden Teilbereichen jeder Klemmbacke bestehen kann. Wahlweise kann vorgesehen sein, dass die relative Zuordnung der beiden Teilbereiche in der ersten und zweiten Arbeitsposition sowie der Abstand der beiden Klemmbacken zueinander jeweils über die Steuerungseinheit einstellbar ist, so dass eine einfache Anpassung des Manipulators bei einem Produktwechsel auf geänderte Abmessungen der Stückgüter möglich ist, ohne dass Formatteile des Manipulators gewechselt werden müssen.

Weiterhin kann vorgesehen sein, dass zwischen der Basis und dem Tragring bzw. Tool- Center-Point drei Wellen zum Antreiben des Greiferkopfes angeordnet sind, wobei eine Welle zum Greifen der Stückgüter, eine Welle zum Drehen des Greiferkopfes und eine weitere Welle zur Veränderung des Abstands zwischen den Teilbereichen der Klemmbacken ausgebildet ist. Eine alternative Ausführungsform, bei der Drehbewegung und die Veränderung des Abstands zwischen den wenigstens zwei Stückgütern miteinander gekoppelt sind, kommt mit zwei Wellen aus.

Ein weiteres alternatives Ausführungsbeispiel kann vorsehen, dass die Stückgüter in vier parallelen Reihen in den Erfassungsbereich des mindestens einen Manipulators des Dreh- und Verteilmoduls einlaufen. Bei einer solchen Ausführungsvariante kann der Manipulator mit vier Greiferköpfen, jeweils umfassend zwei Klemmbacken, ausgestattet sein. Jede der Klemmbacken besteht hierbei aus drei zueinander in einer Flucht verstellbaren Teilbereichen, so dass der Manipulator im Erfassungsbereich die jeweils drei vordersten Stückgüter der vier parallelen Reihen abgreifen kann, diese erfassten insgesamt zwölf Stückgüter von den vier Reihen abtrennt und unter Drehung um 90 Grad in eine definierte relative Zielposition und Zielausrichtung gegenüber den nachfolgenden Stückgütern der vier Reihen bringt. Durch die Drehung werden insbesondere parallel zur Transportrichtung aus den ursprünglich vier zulaufenden Reihen drei abzufördernde Reihen erzeugt. Jede der drei abzufördernden Reihen umfasst jeweils vier Stückgüter, insbesondere jeweils ein Stückgut von jeder der vier zufördernden Reihen.

Zudem kann bei dieser Ausführungsvariante vorgesehen sein, dass durch den Manipulator vor der Freigabe der erfassten insgesamt zwölf Stückgüter in der Zielposition mit der neuen Zielausrichtung in drei abzufördernden Reihen ein definierter Abstand zwischen den parallel zur Transportrichtung ausgebildeten neuen Reihen ausgebildet wird. Dieser Abstand entspricht insbesondere einem Abstand zwischen den über mindestens einen Abförderer in drei Reihen weiterbeförderten Stückgütern. Die durch den Manipulator gedrehten und im Abstand zueinander veränderten Stückgüter sowie die in den Erfassungsbereich einlaufenden Stückgüter der Reihe werden innerhalb des Dreh- und Verteilmoduls auf der Horizontalfördereinrichtung ohne Unterbrechung und mit unveränderter Fördergeschwindigkeit weitertransportiert, und zwar vor dem Positionieren bzw. Erfassen durch den Manipulator sowie normalerweise auch wieder nach dem Erreichen der jeweiligen Zielposition.

Auf diese Weise können besonders kostensparend unterschiedliche Stückgüter abgearbeitet werden. Bei einer Produktumstellung müssen nur die Einstellungen der Klemmbacken zueinander und/oder die der Teilbereiche zueinander über die Steuerungseinrichtung neu definiert werden. Bei der Umstellung der Anzahl der zuführenden und/oder abführenden Bahnen muss dagegen der Manipulator entsprechend angepasst werden. Gegebenenfalls ist hier ein Austausch notwendig, um insbesondere die Anzahl der Greiferköpfe an die Anzahl der zuführenden Reihen anzupassen und/oder um die Anzahl der Teilbereiche der Klemmbacken an die Anzahl der abführenden Reihen anzupassen. Zudem ermöglichen die Vorrichtung und das Verfahren das Drehen und Verteilen von Stückgütern bei geringem Platzbedarf, da hierbei keine eigene Einrichtung notwendig ist, um vorab Abstände zwischen den Stückgütern einzustellen, um nachfolgend die Drehbewegung durchführen zu können.

Bei einem weiteren Ausführungsbeispiel eines Verfahrens zum Umgang mit in einer Reihe hintereinander bewegten Stückgütern durch eine Handhabungsvorrichtung kann zudem vorgesehen sein, dass der Manipulator zusätzlich eine seitliche Versatzbewegung durchführt, bevor er die jeweils erfassten Stückgüter in ihrer jeweiligen relativen Zielposition und Zielanordnung im Erfassungsbereich auf der Horizontalfördereinrichtung freigibt. Insbesondere erfolgt eine solche Versatzbewegung jeweils abwechselnd rechts bzw. links zur Transportrichtung, wodurch eine Aufteilung der Stückgüter von einer zuführenden Reihe in vier über den mindestens einen Abförderer abzufördernde Reihen von Stückgütern erfolgt.

Der mindestens eine Abförderer kann bei allen Ausführungsvarianten aus einem durchgängigen, in Transportrichtung beweglichen Fördermittel gebildet sein oder aber aus einer Mehrzahl von insbesondere parallel angeordneten Fördermitteln bestehen. Gegebenenfalls können diese mehreren Fördermittel einzeln angesteuert zumindest zeitweise mit unterschiedlichen Geschwindigkeiten bewegt werden. Dies kann beispielsweise vorteilhaft sein, wenn die Stückgüter nachfolgend unterschiedlichen weiteren Bearbeitungsmodulen zugeführt werden sollen. Der Abförderer kann auch durch ein orthogonal zur Transportrichtung bewegliches Fördermittel gebildet werden, so dass die Stückgüter in einer Abförderrichtung der weiteren Verarbeitung zugeführt werden, die senkrecht zu der Transportrichtung der Stückgüter über die zuführende Transporteinrichtung ist.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Figuren 1 bis 5 zeigen schematisch einen zeitlichen Ablauf eines ersten Ausführungsbeispiels eines Verfahrens zum Umgang mit in einer Reihe hintereinander bewegten Stückgütern durch eine Handhabungsvorrichtung.

Fig. 6 zeigt eine Vorrichtung mit einem Manipulator zur Durchführung eines ersten Ausführungsbeispiels eines Verfahrens zum Umgang mit in einer Reihe hintereinander bewegten Stückgütern gemäß Figuren 1 bis 5.

Figuren 7 bis 11 zeigen schematisch einen zeitlichen Ablauf eines zweiten Ausführungsbeispiels eines Verfahrens zum Umgang mit in vier Reihen hintereinander bewegten Stückgütern durch eine Handhabungsvorrichtung.

Fig. 12 zeigt eine Vorrichtung mit einem Manipulator einer Handhabungsvorrichtung zur Durchführung eines zweiten Ausführungsbeispiels eines Verfahrens zum Umgang mit in vier Reihen hintereinander bewegten Stückgütern gemäß Figuren 7 bis 11.

Fig. 13 zeigt ein drittes Ausführungsbeispiel eines Verfahrens zum Umgang mit in mindestens einer Reihe hintereinander bewegten Stückgütern durch eine Handhabungsvorrichtung 10.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein kann und stellen keine abschließende Begrenzung dar.

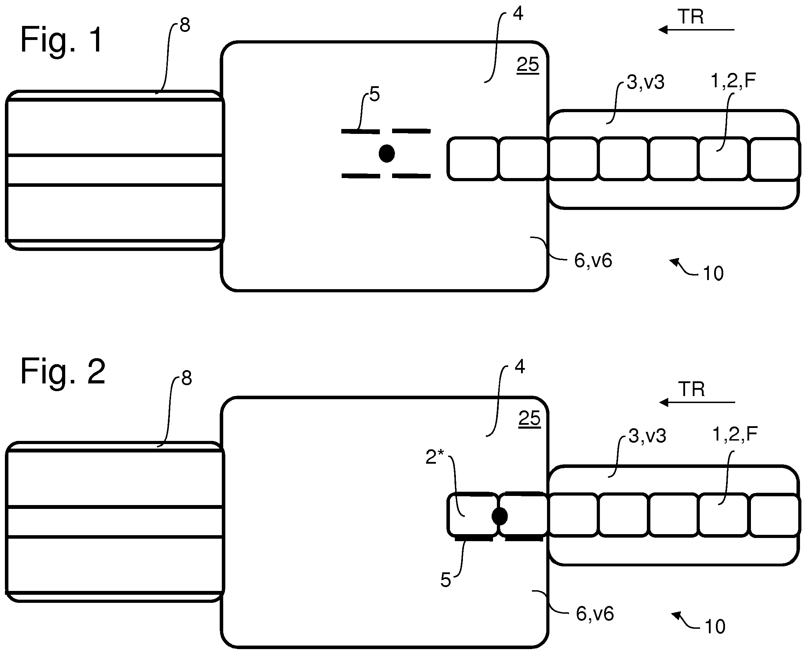

Die Figuren 1 bis 5 zeigen schematisch einen zeitlichen Ablauf eines ersten Ausführungsbeispiels eines Verfahrens zum Umgang mit in einer Reihe 1 hintereinander bewegten Stückgütern 2 durch eine Handhabungsvorrichtung 10. Die Handhabungsvorrichtung 10 umfasst insbesondere ein Dreh- und Verteilmodul 25 mit einem Manipulator 5. Das Dreh- und Verteilmodul 25 mit dem Manipulator 5 kann auch als Gruppiermodul zur Anordnung von Stückgütern 2 gemäß einem vorgegebenen Lagenschema in Lagen oder Teillagen verwendet werden. Beispielhafte Ausführungsformen hierzu sind in der Anmeldung mit dem Aktenzeichen DE 10 2016 206 639.0 beschrieben.

Die gezeigte Handhabungsvorrichtung 10 umfasst eine erste Transporteinrichtung 3, über welche unmittelbar aufeinanderfolgende Stückgüter 2 in einer ersten Reihe 1 unterbrechungsfrei und/oder mit kontinuierlicher Transportgeschwindigkeit v3 in einen Erfassungsbereich 4 mindestens eines Manipulators 5 der Handhabungsvorrichtung 10 transportiert werden. Der Erfassungsbereich 4 meint im vorliegenden Zusammenhang insbesondere den maximalen und/oder den jeweils programmgesteuert vorgegebenen Bewegungsraum des Manipulators 5. Der Erfassungsbereich 4 bzw. dessen äußere räumliche Begrenzung kann hierbei größer sein, als es die Außengrenzen der Horizontalfördereinrichtung 6 vorgeben, auf deren ungefähr horizontalen Oberseite die Stückgüter 2 befördert und/oder mittels des Manipulators 5 positioniert und/oder verschoben werden. Normalerweise jedoch ist der Erfassungsbereich 4 des Manipulators 5 der sinnvolle Bewegungsbereich, in dem sich zu erfassende Stückgüter 2 befinden können und/oder in dem die abzusetzenden Stückgüter 2 positioniert werden können.

Stückgüter 2 im Sinne der vorliegenden Erfindung bzw. des beschriebenen Ausführungsbeispiels können bspw. einzelne Artikel, Pakete oder Gebinde sein. Pakete oder Gebinde können bspw. Schrumpffoliengebinde und/oder Umreifungsgebinde o. dgl. sein, wobei normalerweise mehrere Artikel wie insbesondere Behälter, Flüssigkeits- und/oder Getränkebehälter zu Gebinden zusammengefasst sind.

Die Stückgüter 2 werden auf der Transporteinrichtung 3 bspw. ununterbrochen fortlaufend in Transportrichtung TR befördert. Die zugeführten Stückgüter 2 werden direkt aneinandergrenzend hintereinander zugeführt, d.h. zwischen den Stückgütern 2 der Reihe 1 sind keine Abstände vorhanden. Man spricht in diesem Zusammenhang auch von einer sogenannten geschlossenen Formation. Alternativ könnte vorgesehen sein, dass zwischen den Stückgütern 2 der zuführenden Reihe 1 jeweils definierte Abstände vorhanden sind. In diesem Fall wäre eine vorgeordnete Einrichtung notwendig, die diese Anordnung der Stückgüter 2 innerhalb der Reihe 1 ausbildet.

Die Transporteinrichtung 3 ist beispielsweise mindestens ein Förderband oder mindestens eine andere geeignete Fördereinrichtung, auf der die Stückgüter 2 im dargestellten Ausführungsbeispiel einreihig transportiert werden. Insbesondere kann die Transporteinrichtung 3 durch ein endlos umlaufendes Förderband, eine endlose Förderkette o. dgl. gebildet sein, so dass damit die Stückgüter 2 zur Horizontalfördereinrichtung 6 angeliefert und heranbefördert werden können.

Der Manipulator 5 ist zum klemmenden und/oder formschlüssigen und/oder kraftschlüssigen Entgegennehmen von Stückgütern 2 innerhalb des Erfassungsbereichs 4 ausgebildet und ausgestattet (Fig. 2). Die vom Manipulator 5 erfassten Stückgüter 2 - d.h. in der Regel die in der Formation F zuvorderst erfassten Stückgüter 2 - werden nachfolgend zur Unterscheidung von den übrigen in der Formation F angeordneten Stückgütern 2 mit dem Bezugszeichen 2^{*} bezeichnet.

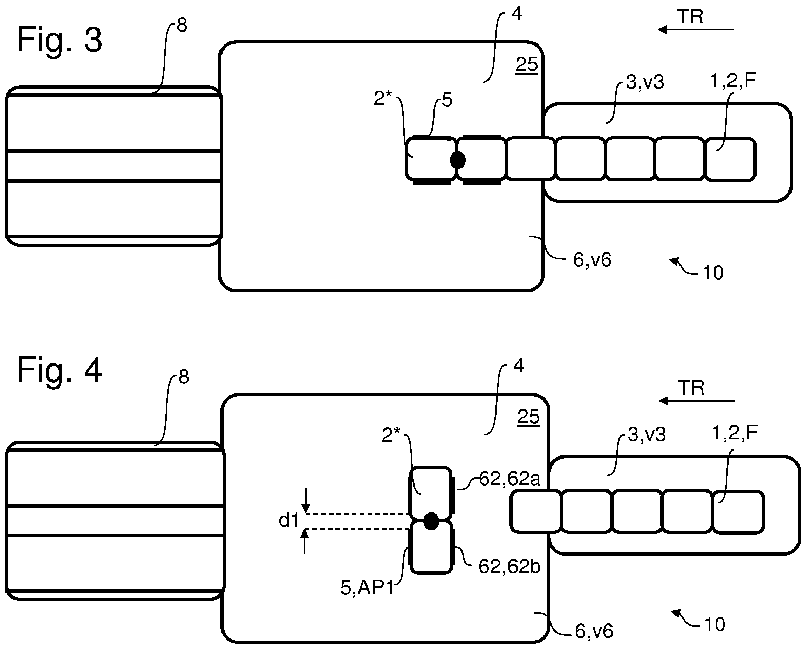

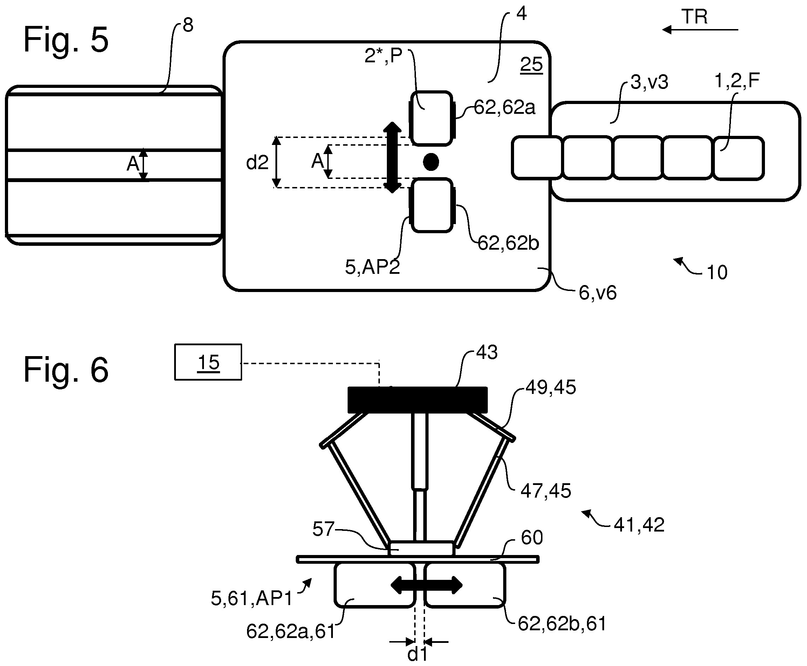

Der Manipulator 5 ist im vorliegenden Beispiel derart ausgestattet, dass er im Erfassungsbereich 4 die jeweils zwei vordersten Stückgüter 2 der Formation F abgreifen kann, diese erfassten Stückgüter 2* von der Formation F abtrennt und unter Drehung um 90 Grad in eine definierte relative Zielposition P und/oder Zielausrichtung gegenüber den nachfolgenden Stückgütern 2 bringt (Fig. 4). Zudem ist vorgesehen, dass durch den Manipulator 5 vor der Freigabe der beiden Stückgüter 2^{*} in der Zielposition P mit der neuen Zielausrichtung ein definierter Abstand A zwischen den zwei Stückgütern 2 ausgebildet wird (Fig. 5). Dieser Abstand A entspricht insbesondere einem Abstand A zwischen den über mindestens einen Abförderer 8 in zwei Reihen weiterbeförderten Stückgütern 2^{*}. Um diese Beabstandung zu bewirken, kann vorgesehen sein, dass dem Manipulator 5 mindestens ein Antrieb zugeordnet ist, der eine gegenläufige Bewegung von Teilbereichen 62a, 62b von Klemmbacken 62 bewirkt. Alternativ kann auch jeder Teilbereich 62a, 62b über einen eigens angesteuerten Antrieb verfahren werden (vergleiche auch Beschreibung zu Fig. 6).

Die durch den Manipulator 5 gedrehten und voneinander beabstandeten Stückgüter 2^{*} sowie die in den Erfassungsbereich 4 einlaufenden Stückgüter 2 der Reihe 1 werden innerhalb des Dreh- und Verteilmoduls 25 auf der Horizontalfördereinrichtung 6 ohne Unterbrechung und mit unveränderter Fördergeschwindigkeit v6 weitertransportiert, und zwar vor dem Positionieren bzw. Erfassen durch den Manipulator 5 sowie normalerweise auch wieder nach dem Erreichen der jeweiligen Zielposition P.

Wie oben bereits erwähnt, ist dem Erfassungsbereich 4 insbesondere die Horizontalfördereinrichtung 6 zugeordnet, deren die Stückgüter 2, 2^{*} tragende Oberfläche sich mit einer Fördergeschwindigkeit v6 bewegt. Insbesondere kann die Fördergeschwindigkeit v6 der Horizontalfördereinrichtung 6 der Transportgeschwindigkeit v3 der Transporteinrichtung 3 entsprechen. Wahlweise können die Transportgeschwindigkeit v3 und die Fördergeschwindigkeit v6 auch geringfügig differieren, sofern gewährleistet werden kann, dass die ununterbrochene Förderung der Stückgüter 2, 2^{*} zur Horizontalfördereinrichtung 6 aufrecht erhalten wird. Die in Reihe 1 bzw. Formation F über die Transporteinrichtung 3 ankommenden Stückgüter 2 können zumindest bei differierenden Geschwindigkeiten v3 und v6 durch den aufgrund der höheren Transportgeschwindigkeit v3 ggf. entstehenden Staudruck der nachfolgenden Stückgüter 2 auf die Horizontalfördereinrichtung 6 übergeschoben und dort unterbrechungsfrei weiter befördert werden.

Allerdings ist es hierbei notwendig, diesen Staudruck durch geeignete Maßnahmen abzubauen, bspw. mittels eines gummierten Förderbandes der Horizontalfördereinrichtung 6 und/oder mittels eines gummierten Förderbandes der Transporteinrichtung 3, wahlweise auch durch ein zwischen der Transporteinrichtung 3 und der Horizontalfördereinrichtung 6 befindliches sog. Bremsband, das durch eine die Stückgüter 2 tragende Oberfläche mit besonders hohem Reibungskoeffizienten charakterisiert ist. Diese oder andere geeignete Maßnahmen sorgen für eine präzise Positionierung der jeweiligen Stückgüter 2 am jeweiligen Erfassungsort im Erfassungsbereich 4, so dass eine präzise Übernahme durch den Manipulator 5 zu gewährleisten ist. Es soll jedoch betont werden, dass solche Maßnahmen zum Abbau eines ggf. vorhandenen bzw. entstandenen Staudrucks nicht wünschenswert sind, auch wenn sie je nach gewählter Konfiguration der beweglichen Teile unverzichtbar bzw. sinnvoll anzuwenden sind.

Gemäß einer Ausführungsform kann vorgesehen sein, dass die Drehung der Stückgüter 2^{*} durch den Manipulator 5 und die Beabstandung der Stückgüter 2^{*} durch den Manipulator 5 gekoppelt sind.

Die Fig. 6 zeigt eine Vorrichtung 41 mit einem Manipulator 5 einer Handhabungsvorrichtung 10 zur Durchführung eines ersten Ausführungsbeispiels eines Verfahrens zum Umgang mit in mindestens einer Reihe 1 hintereinander bewegten Stückgütern 2 gemäß Figuren 1 bis 6.

Die Fig. 6 zeigt eine schematische Ansicht einer Ausführungsform der Vorrichtung 41 bzw. eines Deltakinematik-Roboters 42 zur Durchführung des ober beschriebenen Verfahrens. Die Vorrichtung 41 bzw. der Deltakinematik-Roboter 42 ist bspw. ausgebildet zum Greifen, Drehen und Versetzen zu Gebinden zusammengefasster Getränkebehältnisse, die in Fig. 6 nicht mit dargestellt sind. Die Vorrichtung 41 bzw. der Deltakinematik-Roboter 42 kann jedoch ebenso auch zum Greifen, Drehen und Versetzen von beliebigen Artikeln oder Stückgütern eingesetzt werden.

Wie es in der Fig. 6 zu erkennen ist, besitzt die Vorrichtung 41 bzw. der Deltakinematik-Roboter 42 eine obere Aufhängung 43. An der oberen Aufhängung 43 sind drei Stellarme 45 über einen jeweils zugeordneten Antrieb (nicht dargestellt) drehbar befestigt. Die drehende Bewegung der Stellarme 45 erfolgt hierbei derart, dass ihre Drehachsen parallel zueinander verlaufen. Weiter bestehen die drei Stellarme 45 aus wenigstens zwei relativ zueinander schwenkbaren Armabschnitten 47 und 49, wobei die unteren Armabschnitte 47 bzw. Unterarme 47 jeweils aus zwei parallel zueinander orientierten Gestängen gebildet sind. Der jeweilige obere Armabschnitt 49 bzw. Oberarm 49 steht mit seinem jeweils zugeordneten Antrieb in Verbindung bzw. ist an seinem jeweils zugeordneten Antrieb angeflanscht. Zudem können die drei Stellarme 45 unabhängig voneinander bewegt werden. Sämtliche Antriebe stehen hierzu mit einer Steuerungseinheit 15 in Verbindung, welche die Bewegung der Stellarme 45 vorgibt und die Antriebe ansteuert.

Am unteren Ende der drei Stellarme 45 steht ein Manipulator 5 bzw. Greiferkopf 61 mit den drei Stellarmen 45 derart in Verbindung, dass der Manipulator 5 über eine Bewegung der drei Stellarme 45 zur Handhabung der Stückgüter verfahren werden kann. Die in Fig. 6 dargestellte Steuerungseinheit 15 gibt daher die Bewegung der Stellarme 45 in Abhängigkeit einer für den Manipulator 5 vorgesehenen Position zum Greifen und Handhaben von Stückgütern vor. Sämtliche der drei Stellarme 45 sind über einen Tragring 57 mit einer Basis 60 des Manipulators 5 bzw. Greiferkopfes 61 mechanisch gekoppelt. Die mechanische Verbindung bzw. Koppelung zwischen dem Tragring 57 und der Basis 60 des Manipulators 5 ist derart, dass diese eine relative Verdrehung des Manipulators 5 gegenüber dem Tragring 57 erlaubt. Der Tragring 57 kann auch als Tool-Center-Point der Vorrichtung 41 bezeichnet werden.

Der Manipulator 5 umfasst an der Basis 60 angeordnet einen Greiferkopf 61 mit zwei gegeneinander zustellbaren Klemmbacken 62, zwischen denen die zwei Stückgüter 2^{*} für das Abgreifen und Abtrennen von der Formation F und die Drehung und Veränderung des Abstands geklemmt werden. Die Klemmbacken 62 sind jeweils insbesondere zweiteilig aufgebaut und umfassen zwei Teilbereiche 62a, 62b, die relativ zueinander in einer Flucht verfahren werden können. In den Figuren 4 und 6 befindet sich der Manipulator 5 in einer ersten Arbeitsposition AP1, bei der die beiden Teilbereiche 62a, 62b in einem ersten Abstand d1 zueinander angeordnet sind, so dass sie zwei direkt hintereinander in Formation F einlaufende Stückgüter 2 gut von der Reihe 1 abgreifen können. Zur Beabstandung der beiden erfassten Stückgüter 2^{*} ist vorgesehen, dass die beiden Teilbereiche 62a, 62b jeder Klemmbacke 62 in einer Flucht auseinander bewegt werden können. Um einen Abstand A zwischen den beiden Stückgütern 2^{*} auszubilden, wird zwischen den beiden Teilbereichen 62a, 62b in einer zweiten Arbeitsposition AP2 ein zweiter Abstand d2 erzeugt, der sich aus der Summe des Abstands A zwischen den beiden Stückgütern 2^{*} und dem ersten Abstand d1 zwischen den beiden Teilbereichen 62a, 62b in der ersten Arbeitsposition AP1 ergibt.

Um die Stückgüter 2^{*} in ihrer Zielposition P und Zielanordnung gemäß Fig. 5 freizugeben, werden die Klemmbacken 62 auseinander bewegt. Vor dem Erfassen weiterer in Formation F einlaufender Stückgüter 2 wird der Manipulator 5 wieder in die erste Arbeitsposition AP1 überführt, bei der der erste Abstand d1 zwischen den beiden Teilbereichen 62a, 62b jeder Klemmbacke 62 eingestellt ist.

Beispielsweise kann eine Kopplung der Drehbewegung und der Veränderung des Abstands vorgesehen sein. Beispielsweise kann mit Drehung des Manipulators 5 zur Drehung der Stückgüter 2^{*} um 90 Grad gegenüber den nachfolgenden Stückgütern 2 der Formation auch direkt die Veränderung des Abstands zwischen den beiden Teilbereichen 62a, 62b der Klemmbacken 62 erfolgen. Je weiter die Drehung fortgeschritten ist, desto größer ist auch die Veränderung des Abstands der beiden Teilbereiche 62a, 62b. Insbesondere besteht bei einem Drehwinkel von 0 Grad ein erster Abstand d1 zwischen den beiden Teilbereichen 62a, 62b jeder Klemmbacke 62 und bei einem Drehwinkel von 90 Grad ein zweiter Abstand d2 zwischen den beiden Teilbereichen 62a, 62b jeder Klemmbacke 62.

Vorzugsweise ist vorgesehen, dass die relative Zuordnung der beiden Teilbereiche 62a, 62b in der ersten und zweiten Arbeitsposition AP1, AP2 sowie der Abstand der beiden Klemmbacken 62 zueinander jeweils über die Steuerungseinheit 15 einstellbar ist, so dass eine einfache Anpassung des Manipulators 5 bei einem Produktwechsel auf geänderte Abmessungen der Stückgüter 2 möglich ist, ohne dass Formatteile des Manipulators 5 gewechselt werden müssen.

Beispielsweise kann vorgesehen sein, dass zwischen der Basis 60 und dem Tragring 57 bzw. Tool- Center-Point drei Wellen zum Antreiben des Greiferkopfes 61 angeordnet sind, wobei eine Welle zum Greifen der Stückgüter, eine Welle zum Drehen des Greiferkopfes 61 und eine Welle zur Veränderung des Abstands zwischen den Teilbereichen 62a, 62b der Klemmbacken 62 ausgebildet ist. Eine alternative Ausführungsform, bei der Drehbewegung und die Veränderung des Abstands zwischen den wenigstens zwei Stückgütern miteinander gekoppelt sind, kommt mit zwei Wellen aus.

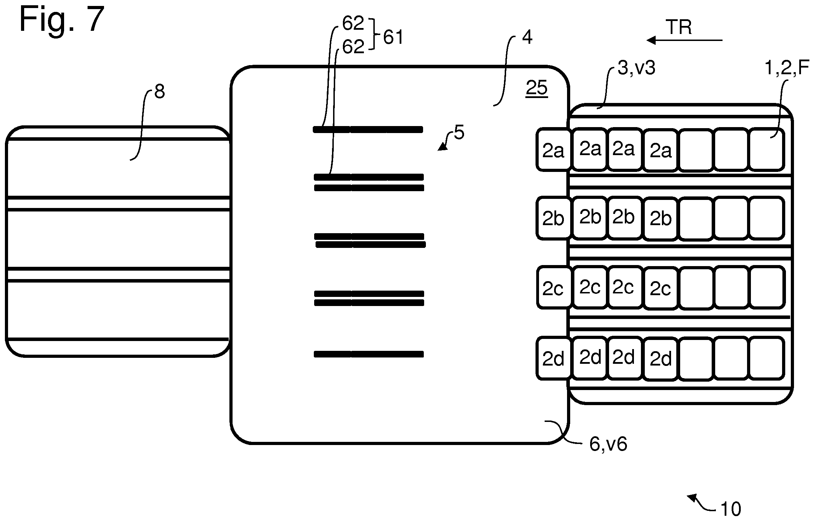

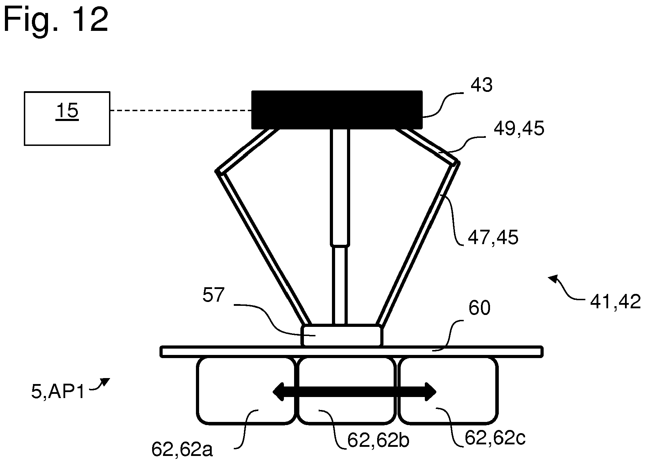

Die Figuren 7 bis 11 zeigen schematisch einen zeitlichen Ablauf eines zweiten Ausführungsbeispiels eines Verfahrens zum Umgang mit in vier Reihen hintereinander bewegten Stückgütern 2 durch eine Handhabungsvorrichtung 10 und Fig. 12 zeigt eine Vorrichtung 41 mit einem Manipulator 5 zur Durchführung dieses Verfahrens.

Im dargestellten Ausführungsbeispiel laufen die Stückgüter 2 in vier parallelen Reihen 1 in den Erfassungsbereich des mindestens einen Manipulators 5 des Dreh- und Verteilmoduls 25 ein. Um nachfolgend die Anordnung der Stückgüter 2 der unterschiedlichen Reihen 1 zu erleichtern, sind jeweils die ersten vier Stückgüter 2 jeder Reihe 1 mit 2a, 2b, 2c oder 2d bezeichnet.

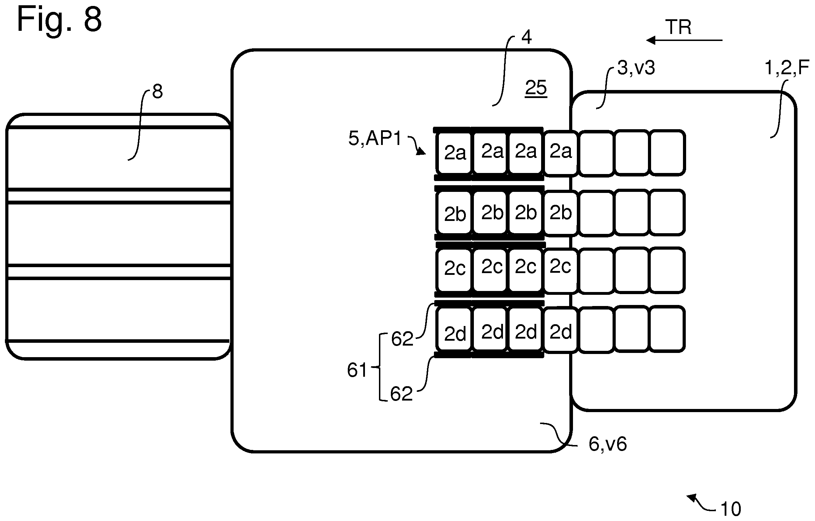

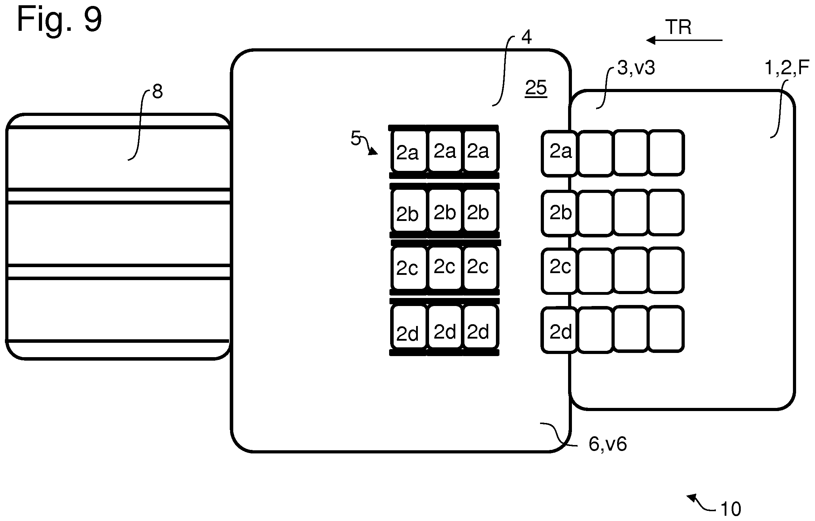

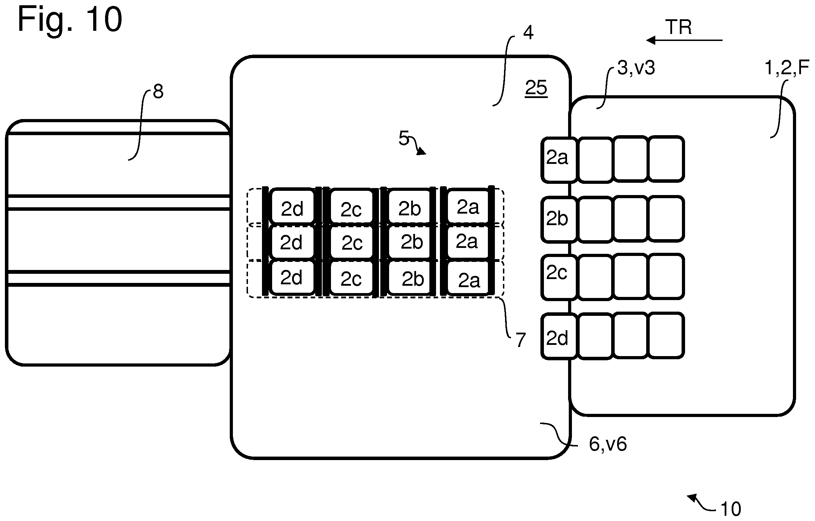

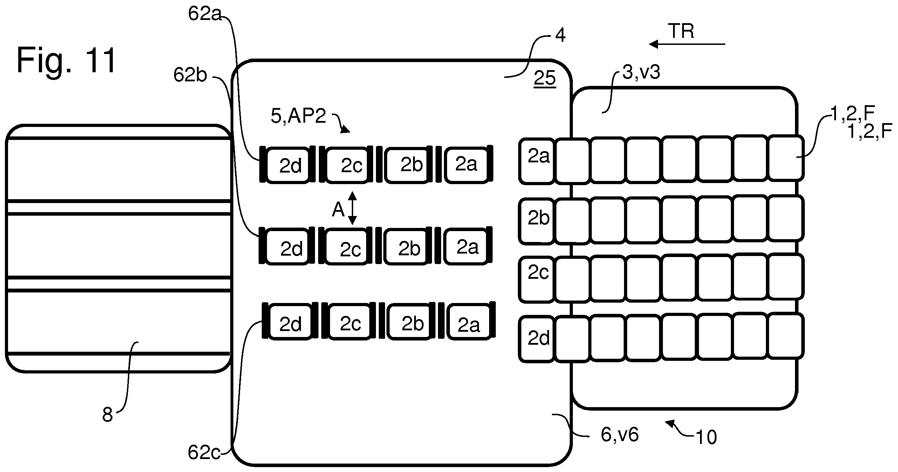

Der Manipulator 5 ist im vorliegenden Beispiel mit vier Greiferköpfen 61, jeweils umfassend zwei Klemmbacken 62, ausgestattet. Jeder der Klemmbacken 62 besteht aus drei zueinander in einer Flucht verstellbaren Teilbereichen 62a, 62b, 62c (vgl. Figuren 11 und 12), so dass der Manipulator 5 im Erfassungsbereich 4 die jeweils drei vordersten Stückgüter 2a, 2b, 2c und 2d der vier parallelen Reihen 1 abgreifen kann (Fig. 8), diese erfassten insgesamt zwölf Stückgüter 2a, 2b, 2c und 2d von den vier Reihen 1 abtrennt (Fig. 9) und unter Drehung um 90 Grad in eine definierte relative Zielposition und Zielausrichtung gegenüber den nachfolgenden Stückgütern 2 der vier Reihen 1 bringt (Fig. 10). Durch die Drehung werden insbesondere parallel zur Transportrichtung TR aus den ursprünglich vier zulaufenden Reihen 1 drei abzufördernde Reihen 7 (jeweils mittels gestrichelter Umrandung markiert) erzeugt. Jede der drei abzufördernden Reihen 7 umfasst jeweils vier Stückgüter 2a, 2b, 2c, 2d, insbesondere jeweils ein Stückgut 2a, 2b, 2c, 2d von jeder der vier zufördernden Reihen 1.

Zudem ist vorgesehen, dass durch den Manipulator 5 vor der Freigabe der erfassten insgesamt zwölf Stückgüter 2a, 2b, 2c und 2d in der Zielposition P mit der neuen Zielausrichtung in drei abzufördernden Reihen 7 ein definierter Abstand A zwischen den parallel zur Transportrichtung TR ausgebildeten neuen Reihen 7 ausgebildet wird (Fig. 11). Dieser Abstand A entspricht insbesondere einem Abstand A zwischen den über mindestens einen Abförderer 8 in drei Reihen weiterbeförderten Stückgütern 2a, 2b, 2c, 2d.

Die durch den Manipulator 5 gedrehten und im Abstand zueinander veränderten Stückgüter 2^{*} sowie die in den Erfassungsbereich 4 einlaufenden Stückgüter 2 der Reihe 1 werden innerhalb des Dreh- und Verteilmoduls 25 auf der Horizontalfördereinrichtung 6 ohne Unterbrechung und mit unveränderter Fördergeschwindigkeit v6 weitertransportiert, und zwar vor dem Positionieren bzw. Erfassen durch den Manipulator 5 sowie normalerweise auch wieder nach dem Erreichen der jeweiligen Zielposition P.

Zur Beschreibung der Vorrichtung 41 mit dem Manipulator 5 wird im Wesentlichen auf die Beschreibung der Fig. 6 verwiesen. Der Manipulator 5 umfasst vier an der Basis 60 angeordnete Greiferköpfe 61 mit jeweils zwei gegeneinander zustellbaren Klemmbacken 62. Zwischen den Klemmbacken 62 eines Greiferkopfes 61 können jeweils drei Stückgüter 2a oder 2b oder 2c oder 2d der vier zuführenden Reihen 1 für das Abgreifen und Abtrennen von der jeweiligen Formation F und die nachfolgende Drehung und Beabstandung geklemmt werden (Fig. 8). Die Klemmbacken 62 sind jeweils insbesondere dreiteilig aufgebaut und umfassen drei Teilbereiche 62a, 62b, 62c, die relativ zueinander in einer Flucht verfahren werden können.

In den Figuren 8 und 12 befindet sich der Manipulator 5 in einer ersten Arbeitsposition AP1, bei der die beiden Teilbereiche 62a, 62b direkt aneinandergrenzend angeordnet sind, so dass sie drei direkt hintereinander in Formation F einlaufende Stückgüter 2a oder 2b oder 2c oder 2d gut von der jeweiligen Reihe 1 abgreifen können. Zur Beabstandung der drei erfassten Stückgüter 2a oder 2b oder 2c oder 2d ist vorgesehen, dass die drei Teilbereiche 62a, 62b, 62c jeder Klemmbacke 62 auseinander bewegt werden können. Dadurch werden auf der Horizontalfördereinrichtung 6 parallel zur Transportrichtung TR drei Reihen 7 an Stückgütern 2 erzeugt, wobei quer zur Transportrichtung TR ein definierter Abstand A zwischen den abzufördernden Reihen 7 ausgebildet ist, der insbesondere einem notwendigen Teilungsabstand nachfolgender Verarbeitungsmodule entspricht.

Auf diese Weise können besonders kostensparend unterschiedliche Stückgüter abgearbeitet werden. Bei einer Produktumstellung müssen nur die Einstellungen der Klemmbacken 62 zueinander und/oder die der Teilbereiche 62a, 62b, 62c zueinander über die Steuerungseinrichtung 15 neu definiert werden. Bei der Umstellung der Anzahl der zuführenden und/oder abführenden Bahnen muss dagegen der Manipulator entsprechend angepasst werden. Gegebenenfalls ist hier ein Austausch notwendig, um insbesondere die Anzahl der Greiferköpfe 61 an die Anzahl der zuführenden Reihen 1 anzupassen und/oder um die Anzahl der Teilbereiche 62a, 62b, 62c der Klemmbacken 62 an die Anzahl der abführenden Reihen 7 anzupassen. Zudem ermöglichen die Vorrichtung und das Verfahren das Drehen und Verteilen von Stückgütern bei geringem Platzbedarf, da hierbei keine eigene Einrichtung notwendig ist, um vorab Abstände zwischen den Stückgütern einzustellen, um nachfolgend die Drehbewegung durchführen zu können.

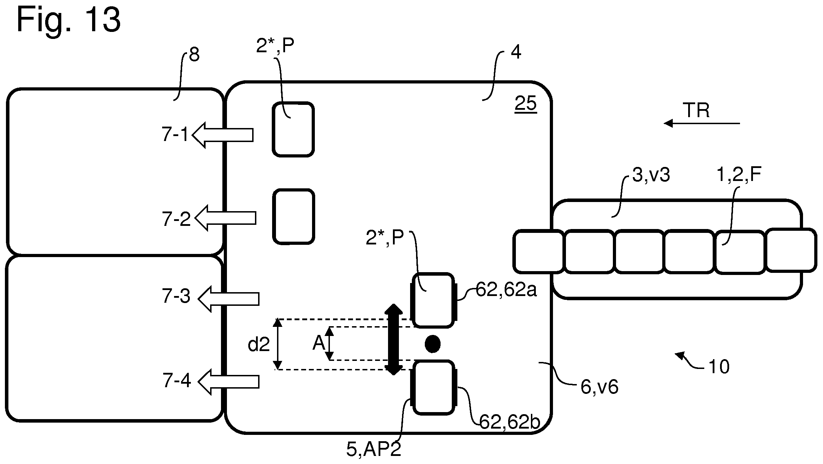

Die schematische Draufsicht der Fig. 13 zeigt ein drittes Ausführungsbeispiel eines Verfahrens zum Umgang mit in einer Reihe 1 hintereinander bewegten Stückgütern 2 durch eine Handhabungsvorrichtung 10. Der Ablauf entspricht im Wesentlichen dem ersten Ausführungsbeispiel gemäß den Figuren 1 bis 6. Zusätzlich hierzu führt der Manipulator 5 eine seitliche Versatzbewegung durch, bevor er die beiden erfassten Stückgüter 2^{*} in ihrer jeweiligen relativen Zielposition P und Zielanordnung im Erfassungsbereich 4 auf der Horizontalfördereinrichtung 6 freigibt. Insbesondere erfolgt eine solche Versatzbewegung jeweils abwechselnd rechts bzw. links zur Transportrichtung TR, wodurch eine Aufteilung der Stückgüter 2 von einer zuführenden Reihe 1 in vier über den mindestens einen Abförderer 8 abzufördernde Reihen 7-1, 7-2, 7-3 und 7-4 von Stückgütern 2* erfolgt.

Der mindestens eine Abförderer 8 kann aus einem durchgängigen, in Transportrichtung TR beweglichen Fördermittel gebildet sein oder aber, wie in Fig. 13 dargestellt, aus einer Mehrzahl von insbesondere parallel angeordneten Fördermitteln bestehen. Gegebenenfalls können diese mehreren Fördermittel einzeln angesteuert zumindest zeitweise mit unterschiedlichen Geschwindigkeiten bewegt werden. Dies kann beispielsweise vorteilhaft sein, wenn die Stückgüter 2^{*} nachfolgend unterschiedlichen weiteren Bearbeitungsmodulen zugeführt werden. Der Abförderer 8 kann auch durch ein orthogonal zu Transportrichtung TR bewegliches Fördermittel gebildet werden, so dass die Stückgüter 2 in einer Abförderrichtung der weiteren Verarbeitung zugeführt werden, die senkrecht zu der Transportrichtung TR der Stückgüter 2 über die zuführende Transporteinrichtung 3 ist.

Folgendes sei als ergänzender Hinweis zu den vorstehenden Ausführungen gegeben: Wenn auch im Zusammenhang der Figuren und deren vorstehenden Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Vorrichtung 10 zum Umgang mit in mindestens einer Reihe 1 hintereinander bewegten Stückgütern 2 oder anderer gezeichneter Elemente in irgendeiner Weise in seinem Verständnis beeinträchtigt wäre. Die Figuren ermöglichen es dem Fachmann als Leser vielmehr, anhand der konkreter erläuterten Umsetzungen des erfindungsgemäßen Verfahrens und des konkreter erläuterten Aufbaus der erfindungsgemäßen Vorrichtung 10 ein besseres Verständnis für den in den Ansprüchen sowie im allgemeinen Teil der Beschreibung allgemeiner und/oder abstrakter formulierten Erfindungsgedanken abzuleiten.

Schließlich sei darauf hingewiesen, dass die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, unabhängig voneinander oder in beliebiger Kombination verwendet werden können. Merkmale, die in Verbindung mit einer Ausführungsform beschrieben werden, sind für alle Ausführungsformen anwendbar, sofern die Merkmale nicht unvereinbar sind. Die Erfindung wurde unter Bezugnahme auf bevorzugte Ausführungsformen beschrieben. Es ist für einen Fachmann vorstellbar, dass Abwandlungen oder Änderungen der Erfindung gemacht werden können, ohne dabei den Schutzbereich der nachstehenden Ansprüche zu verlassen. Es ist möglich, einige der Komponenten oder Merkmale eines der Beispiele in Kombination mit Merkmalen oder Komponenten eines anderen Beispiels anzuwenden.

### Bezuaszeichenliste

- 1: Reihe
- 2 / 2^{*}: Stückgut
- 2a, 2b, 2c, 2d: Stückgut
- 3: Transporteinrichtung
- 4: Erfassungsbereich
- 5: Manipulator
- 6: Horizontalfördereinrichtung
- 7, 7-1, 7-2, 7-3, 7-4: abzufördernde Reihe
- 8: Abförderer
- 10: Handhabungsvorrichtung
- 15: Steuerungseinheit
- 25: Dreh- und Verteilmodul
- 41: Vorrichtung
- 42: Deltakinematik-Roboter
- 43: obere Aufhängung
- 45: Stellarm
- 47: unterer Armabschnitt, Unterarm
- 49: oberer Armabschnitt, Oberarm
- 57: Tragring
- 60: Basis
- 61: Greiferkopf
- 62: Klemmbacke
- 62a, 62b, 62c: Teilbereich

- A: Abstand
- AP1 / AP2: erste / zweite Arbeitsposition
- d1 / d2: erster / zweiter Abstand
- F: Formation
- P: Zielposition
- TR: Transportrichtung
- v3: Transportgeschwindigkeit
- v6: Fördergeschwindigkeit

## Patentansprüche

1. Vorrichtung (10) zum Umgang mit in mindestens einer Reihe (1) hintereinander bewegten Stückgütern (2), umfassend:
- mindestens einen Manipulator (5) für Stückgüter (2),
- wenigstens eine Transporteinrichtung (3), über welche unmittelbar aufeinanderfolgende Stückgüter (2) der Reihe (1) ohne Beabstandung ununterbrochend fortlaufend in einer Transportrichtung (TR) als mindestens eine geschlossene Formation (F) in einen Erfassungsbereich (4) des mindestens einen Manipulators (5) transportierbar sind,
- wobei der mindestens eine Manipulator (5) zum klemmenden und/oder kraft- und/oder formschlüssigen Entgegennehmen mindestens zweier Stückgüter (2) von der mindestens einen geschlossenen Formation (F) sowie zum Abtrennen und Überführen dieser mindestens zwei Stückgüter (2) in eine Zielposition (P) und/oder Zielausrichtung ausgebildet ist,
- wobei die Stückgüter (2) auf einer dem Manipulator (5) zugeordneten Horizontalfördereinrichtung in der Zielposition (P) und/oder Zielausrichtung angeordnet werden,
- wobei der mindestens eine Manipulator (5) zum Drehen der mindestens zwei Stückgüter (2) um eine vertikale Achse ausgebildet ist, und
- wobei der mindestens eine Manipulator (5) zu einer Veränderung eines Abstands zwischen den wenigstens zwei Stückgütern (2) ausgebildet ist, wobei
- der Manipulator (5) einen Greiferkopf (61) zum gleichzeitigen Erfassen der mindestens zwei Stückgüter (2) umfasst, wobei der Greiferkopf (61) um eine vertikale Achse drehbar an einem Drehgelenk angeordnet ist, und wobei der Greiferkopf (61) Mittel zur Veränderung des Abstands zwischen den wenigstens zwei Stückgütern (2) umfasst, wobei
- der Greiferkopf (61) mindestens zwei gegeneinander zustellbare Klemmbacken (62) zum klemmenden und/oder kraft- und/oder formschlüssigen Entgegennehmen der mindestens zwei Stückgüter (2) umfasst, wobei jede der beiden Klemmbacken (62) aus mindestens zwei fluchtenden Teilbereichen (62a, 62b) besteht, wobei die mindestens zwei fluchtenden Teilbereiche (62a, 62b) zueinander abstandsvariabel ausgebildet sind,
**dadurch gekennzeichnet, dass**
- die mindestens zwei fluchtenden Teilbereiche (62a, 62b) in einer ersten Arbeitsposition (AP1) des Manipulators (5) in einem ersten Abstand (d1) angeordnet sind, so dass der Greiferkopf (61) zur Entgegennahme der mindestens zwei Stückgüter (2) ausgebildet ist,
- und wobei die mindestens zwei fluchtenden Teilbereiche (62a, 62b) in einer zweiten Arbeitsposition (AP2) des Manipulators (5) in einem zweiten Abstand (d2) angeordnet sind, so dass der Greiferkopf (61) zur Freigabe der mindestens zwei Stückgüter (2) in der Zielposition (P) und/oder Zielausrichtung mit verändertem Abstand zwischen den beiden Stückgütern (2) ausgebildet ist.

2. Vorrichtung (10) nach Anspruch 1, bei welcher der Manipulator (5) durch mindestens ein austauschbares Formatteil gebildet ist oder ein solches umfasst, und wobei bei einem Produktwechsel das mindestens eine Formatteil austauschbar ist, um die Vorrichtung (10) an die geänderten Produktionsbedingungen anzupassen.

3. Vorrichtung (10) nach einem der Ansprüche 1 oder 2, bei der dem mindestens einen Mittel des Manipulators (5) zum Drehen der mindestens zwei Stückgüter (2) um eine vertikale Achse und dem mindestens einen Mittel des Manipulators (5) zur Veränderung des Abstands zwischen den wenigstens zwei Stückgütern (2) jeweils ein eigener Antrieb zugeordnet ist.

4. Vorrichtung (10) nach einem der Ansprüche 1 oder 2, bei der das mindestens eine Mittel des Manipulators (5) zum Drehen der mindestens zwei Stückgüter (2) um eine vertikale Achse und das mindestens eine Mittel des Manipulators (5) zur Veränderung des Abstands zwischen den wenigstens zwei Stückgütern (2) miteinander gekoppelt sind, insbesondere wobei das mindestens eine Mittel zum Drehen und das mindestens eine Mittel zu Veränderung des Abstands zwischen den wenigstens zwei Stückgütern (2) einen gemeinsamen Antrieb umfassen.

5. Vorrichtung (10) nach einem der voranstehenden Ansprüche, bei der die Vorrichtung (10) mindestens eine Erfassungseinrichtung zur Überwachung des Zulaufs von in mindestens einer Reihe (1) hintereinander bewegten Stückgütern (2) umfasst, wobei die Erfassungseinrichtung mit dem mindestens einen Manipulator (5) gekoppelt ist und wobei ein Bewegungsablauf des mindestens einen Manipulators (5) aufgrund der von der Erfassungseinrichtung ermittelten Daten steuerbar ist.

6. Vorrichtung (10) nach einem der voranstehenden Ansprüche, bei welcher der mindestens eine Manipulator (5) oder Teile des mindestens einen Manipulators (5) durch einen Tripoden oder einen Parallelkinematik-Roboter gebildet ist/sind.

7. Verfahren zum Umgang mit in mindestens einer Reihe (1) hintereinander bewegten Stückgütern (2) vermittels einer Vorrichtung (10) gemäß einem der Ansprüche 1 bis 6, bei dem
- die Stückgüter (2) innerhalb der mindestens einen Reihe (1) ohne Abstände unmittelbar aufeinanderfolgend als geschlossene Formation (F) transportiert werden und
- wenigstens zwei transportierte Stückgüter (2) aus der mindestens einen geschlossenen Formation (F) klemmend und/oder kraft- und/oder formschlüssig erfasst, von der mindestens einen geschlossenen Formation (F) räumlich abgetrennt und unter Drehung in eine definierte relative Zielposition (P) und/oder Zielausrichtung gegenüber nachfolgenden Stückgütern (2) der mindestens einen geschlossenen Formation (F) gebracht werden,
- wobei in der definierten relativen Zielposition (P) und/oder Zielausrichtung ein Abstand (A) zwischen den wenigstens zwei transportierten Stückgütern (2) gegenüber der ursprünglichen Anordnung der wenigstens zwei erfassten Stückgüter (2) vor dem Erfassen und Abtrennen von der mindestens einen geschlossenen Formation (F) verändert ist,
- und wobei die Veränderung des Abstands zwischen den wenigstens zwei Stückgütern (2) zwischen dem Erfassen und Abtrennen von der mindestens einen geschlossenen Formation (F) und dem Freigeben der wenigstens zwei Stückgüter (2) in der definierten relativen Zielposition (P) und/oder Zielausrichtung durchgeführt wird.

8. Verfahren nach Anspruch 7, bei dem die mindestens zwei erfassten Stückgüter (2) unter Drehung um etwa 90 Grad oder um etwa 270 Grad in die definierte relative Zielposition (P) und/oder Zielausrichtung gebracht werden.

9. Verfahren nach Anspruch 7 oder 8, bei dem die Drehbewegung und die Veränderung des Abstands zwischen den wenigstens zwei Stückgütern (2) annähernd simultan oder innerhalb eines definierten Zeitintervalls erfolgt, insbesondere wobei die Veränderung des Abstands zwischen den wenigstens zwei Stückgütern (2) und die Drehbewegung gekoppelt sind.

10. Verfahren nach einem der Ansprüche 7 bis 9, bei dem die mindestens zwei erfassten Stückgüter (2) in eine definierte relative Zielposition (P) und/oder Zielausrichtung überführt werden, die seitlich versetzt zu einer Flucht der in geschlossener Formation (F) nachfolgenden Stückgüter (2) angeordnet ist.

11. Verfahren nach einem der Ansprüche 7 bis 10, bei dem Stückgüter (2) in n Reihen (1) in einer Transportrichtung (TR) transportiert werden, wobei von jeder der n Reihen (1) eine Anzahl von mindestens n+1 Stückgüter (2) erfasst wird und in eine Anordnung von mindestens n+1 abführenden Reihen (7) an Stückgütern (2) überführt wird.

12. Verfahren nach einem der Ansprüche 7 bis 11, bei dem Stückgüter (2) in n Reihen (1) in einer Transportrichtung (TR) transportiert werden, wobei von jeder der n Reihen (1) eine Anzahl von maximal n-1 Stückgüter (2) erfasst wird und in eine Anordnung von maximal n-1 abführenden Reihen (7) an Stückgütern (2) überführt wird, wobei gilt, dass die Anzahl der maximal n-1 abführenden Reihen (7) ≥ 1 ist.

## Claims

1. A device (10) for handling piece goods (2) moved one after another in at least one row (1), comprising:
- at least one manipulator (5) for piece goods (2),
- at least one transport device (3), via which transport device (3) directly successive piece goods (2) of the row (1) can be transported continuously without spacing in an uninterrupted manner in a transport direction (TR) as at least one closed formation (F) into a seizing range (4) of the at least one manipulator (5),
- wherein the at least one manipulator (5) is designed for seizing at least two piece goods (2) from the at least one closed formation (F) in a clamping and/or force-locking and/or form-locking manner, as well as for the separating and transferring these at least two piece goods (2) into a target position (P) and/or target alignment,
- wherein the piece goods (2) are arranged in the target position (P) and/or target alignment on a horizontal conveying device, which horizontal conveying device is associated with the manipulator (5),
- wherein the at least one manipulator (5) is designed to rotate the at least two piece goods (2) about a vertical axis, and
- wherein the at least one manipulator (5) is designed to vary a distance between the at least two piece goods (2), wherein
- the manipulator (5) comprises a gripper head (61) for simultaneously seizing the at least two piece goods (2), wherein the gripper head (61) is arranged rotatably about a vertical axis on a pivot joint, and wherein the gripper head (61) comprises means for varying the distance between the at least two piece goods (2), wherein
- the gripper head (61) comprises at least two clamping jaws (62) for seizing the at least two piece goods (2) in a clamping and/or force-locking and/or form-locking manner, which clamping jaws (62) can be advanced towards one another, each of the two clamping jaws (62) comprising at least two partial regions (62a, 62b) in aligned arrangement, the at least two aligned partial regions (62a, 62b) being designed to be variable in distance from one another,
**characterised in that**
- the at least two aligned partial regions (62a, 62b) are arranged in a first working position (AP1) of the manipulator (5) at a first distance (d1), so that the gripper head (61) is designed to seize the at least two piece goods (2),
- and wherein the at least two aligned partial regions (62a, 62b) are arranged in a second working position (AP2) of the manipulator (5) at a second distance (d2), so that the gripper head (61) is designed to release the at least two piece goods (2) in the target position (P) and/or target alignment with an amended distance between the two piece goods (2).

2. The device (10) according to claim 1, wherein the manipulator (5) is designed as or comprises at least one exchangeable format part, and wherein, in the event of a product change, the at least one format part can be exchanged in order to customize the device (10) to the changed production requirements.

3. The device (10) according to one of the claims 1 or 2, in which an own drive is assigned to each of the at least one means of the manipulator (5) for rotating the at least two piece goods (2) about a vertical axis and the at least one means of the manipulator (5) for varying the distance between the at least two piece goods (2).

4. The device (10) according to one of the claims 1 or 2, in which the at least one means of the manipulator (5) for rotating the at least two piece goods (2) about a vertical axis and the at least one means of the manipulator (5) for changing the distance between the at least two piece goods (2) are coupled to one another, in particular wherein the at least one means for rotating and the at least one means for changing the distance between the at least two piece goods (2) comprise a common drive.

5. The device (10) according to one of the preceding claims, in which the device (10) comprises at least one detection device for monitoring the infeed of piece goods (2) moved one after another in at least one row (1), wherein the detection device is coupled to the at least one manipulator (5) and wherein a movement sequence of the at least one manipulator (5) can be controlled on the basis of the data determined by the detection device.

6. The device (10) according to one of the preceding claims, wherein the at least one manipulator (5) or parts of the at least one manipulator (5) is/are formed by a tripod or a parallel kinematic robot.

7. A method for handling piece goods (2) moved one after another in at least one row (1) by means of a device (10) according to one of the claims 1 to 6, wherein
- the piece goods (2) are transported within the at least one row (1) without spacing one directly following after the other in an uninterrupted manner as a closed formation (F) and
- at least two transported piece goods (2) from the at least one closed formation (F) are seized in a clamping and/or force-locking and/or form-locking manner, spatially separated from the at least one closed formation (F) and brought under rotation into a defined relative target position (P) and/or target alignment with respect to subsequent piece goods (2) of the at least one closed formation (F),
- wherein in the defined relative target position (P) and/or target alignment a distance (A) between the at least two transported piece goods (2) is changed compared to the original arrangement of the at least two seized piece goods (2) before the seizing and separation from the at least one closed formation (F),
- and wherein the variation of the distance between the at least two piece goods (2) is performed between the seizing and separation from the at least one closed formation (F) and the release of the at least two piece goods (2) in the defined relative target position (P) and/or target alignment.

8. The method according to claim 7, in which the at least two seized piece goods (2) are brought into the defined relative target position (P) and/or target alignment while being rotated by about 90 degrees or by about 270 degrees.

9. The method according to claim 7 or 8, in which the rotary movement and the variation in the distance between the at least two piece goods (2) take place approximately simultaneously or within a defined time interval, in particular wherein the variation in the distance between the at least two piece goods (2) and the rotary movement are coupled.

10. The method according to one of the claims 7 to 9, in which the at least two seized piece goods (2) are transferred into a defined relative target position (P) and/or target alignment, which is arranged laterally offset to an alignment of the subsequently following piece goods (2) of the closed formation (F).

11. The method according to one of claims 7 to 10, in which piece goods (2) are transported in n rows (1) in a transport direction (TR), wherein a number of at least n+1 piece goods (2) is seized from each of the n rows (1) and is being transferred into an arrangement of at least n+1 outgoing rows (7) of piece goods (2).

12. The method according to one of the claims 7 to 11, in which piece goods (2) are transported in n rows (1) in a transport direction (TR), wherein a number of at most n-1 piece goods (2) is seized from each of the n rows (1) and is being transferred into an arrangement of at most n-1 outgoing rows (7) of piece goods (2), it being the case that the number of at most n-1 discharging rows (7) is ≥ 1.

## Revendications

1. Dispositif (10) de manipulation de produits de détail (2) déplacés les uns derrière les autres en au moins une rangée (1), comprenant:
- au moins un manipulateur (5) pour les produits de détail (2),
- au moins un dispositif de transport (3) par l'intermédiaire duquel des produits de détail (2) immédiatement successifs de la rangée (1) peuvent être transportés sans espacement de manière ininterrompue et continue, en tant qu'au moins une formation fermée (F), dans une direction de transport (TR) dans une zone de saisie (4) dudit au moins un manipulateur (5),
- dans lequel ledit au moins un manipulateur (5) est conçu pour recevoir par serrage et/ou par adhérence et/ou à engagement positif au moins deux produits de détail (2) de ladite au moins une formation fermée (F) ainsi que pour séparer et transférer ces au moins deux produits de détail (2) dans une position cible (P) et/ou orientation cible,
- dans lequel les produits de détail (2) sont disposés dans la position cible (P) et/ou l'orientation cible sur un dispositif de transport horizontal associé au manipulateur (5),
- dans lequel ledit au moins un manipulateur (5) est conçu pour faire tourner lesdits au moins deux produits de détail (2) autour d'un axe vertical, et
- dans lequel ledit au moins un manipulateur (5) est conçu pour modifier une distance entre lesdits au moins deux produits de détail (2), dans lequel
- le manipulateur (5) comprend une tête de préhension (61) destinée à saisir simultanément lesdits au moins deux produits de détail (2), dans lequel ladite tête de préhension (61) est disposée sur un joint rotatif de manière à pouvoir tourner autour d'un axe vertical, et dans lequel ladite tête de préhension (61) comprend des moyens destinés à modifier la distance entre lesdits au moins deux produits de détail (2), dans lequel
- la tête de préhension (61) comprend au moins deux mâchoires de serrage (62) qui peuvent être avancées l'une vers l'autre et qui sont destinées à recevoir par serrage et/ou par adhérence et/ou à engagement positif lesdits au moins deux produits de détail (2), dans lequel chacune des deux mâchoires de serrage (62) est constituée d'au moins deux zones partielles (62a, 62b) alignées, dans lequel lesdites au moins deux zones partielles (62a, 62b) alignées sont conçues de manière variable en distance l'une par rapport à l'autre,
**caractérisé par le fait que**
- lesdites au moins deux zones partielles (62a, 62b) alignées sont disposées à une première distance (d1) dans une première position de travail (AP1) du manipulateur (5) de sorte que la tête de préhension (61) est conçue pour recevoir lesdits au moins deux produits de détail (2),
- et dans lequel lesdites au moins deux zones partielles (62a, 62b) alignées sont disposées à une deuxième distance (d2) dans une deuxième position de travail (AP2) du manipulateur (5) de sorte que la tête de préhension (61) est conçue pour libérer lesdits au moins deux produits de détail (2) dans la position cible (P) et/ou l'orientation cible avec une distance modifiée entre les deux produits de détail (2).

2. Dispositif (10) selon la revendication 1, dans lequel le manipulateur (5) est formé par au moins une pièce de format échangeable ou comprend une telle pièce de format, et dans lequel ladite au moins une pièce de format est échangeable lors d'un changement de produit afin d'adapter le dispositif (10) aux conditions de production changées.

3. Dispositif (10) selon l'une quelconque des revendications 1 ou 2, dans lequel respectivement un propre mécanisme d'entraînement est associé audit au moins un moyen du manipulateur (5) destiné à faire tourner lesdits au moins deux produits de détail (2) autour d'un axe vertical et audit au moins un moyen du manipulateur (5) destiné à modifier la distance entre lesdites au moins deux produits de détail (2).

4. Dispositif (10) selon l'une quelconque des revendications 1 ou 2, dans lequel ledit au moins un moyen du manipulateur (5) destiné à faire tourner lesdits au moins deux produits de détail (2) autour d'un axe vertical et ledit au moins un moyen du manipulateur (5) destiné à modifier la distance entre lesdits au moins deux produits de détail (2) sont couplés l'un à l'autre, en particulier dans lequel ledit au moins un moyen destiné à faire tourner et ledit au moins un moyen destiné à modifier la distance entre lesdits au moins deux produits de détail (2) comprennent un mécanisme d'entraînement commun.

5. Dispositif (10) selon l'une quelconque des revendications précédentes, dans lequel le dispositif (10) comprend au moins un dispositif de détection destiné à surveiller l'afflux de produits de détail (2) déplacés les uns derrière les autres en au moins une rangée (1), dans lequel le dispositif de détection est couplé audit au moins un manipulateur (5) et dans lequel une séquence de mouvements dudit au moins un manipulateur (5) peut être commandée sur la base des données déterminées par le dispositif de détection.

6. Dispositif (10) selon l'une quelconque des revendications précédentes, dans lequel ledit au moins un manipulateur (5) ou des parties dudit au moins un manipulateur (5) est/sont formé(s) par un tripode ou un robot à cinématique parallèle.

7. Procédé de manipulation de produits de détail (2) déplacés les uns derrière les autres en au moins une rangée (1), au moyen d'un dispositif (10) selon l'une quelconque des revendications 1 à 6, dans lequel
- les produits de détail (2) à l'intérieur de ladite au moins une rangée (1) sont transportés en tant que formation fermée (F), sans intervalles en se suivant directement, et
- au moins deux produits de détail (2) transportés sont saisi par serrage et/ou par adhérence et/ou à engagement positif dans ladite au moins une formation fermée (F), sont séparés spatialement de ladite au moins une formation fermée (F) et sont amenés, en étant tournés, dans une position cible (P) et/ou orientation cible relative(s) définie(s) par rapport à des produits de détail (2) suivants de ladite au moins une formation fermée (F),
- dans lequel, dans la position cible (P) et/ou l'orientation cible relative(s) définie(s), une distance (A) entre lesdits au moins deux produits de détail (2) transportés est modifiée par rapport à la disposition originale desdits au moins deux produits de détail (2) saisis avant qu'ils soient saisis et séparés de ladite au moins une formation fermée (F),
- et dans lequel la modification de la distance entre lesdits au moins deux produits de détail (2) est réalisée entre la saisie et la séparation de ladite au moins une formation fermée (F) et la libération desdits au moins deux produits de détail (2) dans la position cible (P) et/ou l'orientation cible relative(s) définie(s).

8. Procédé selon la revendication 7, dans lequel lesdits au moins deux produits de détail (2) saisis sont amenés dans la position cible (P) et/ou l'orientation cible relative(s) définie(s) tout en étant tournés de 90 degrés à peu près ou de 270 degrés à peu près.

9. Procédé selon la revendication 7 ou 8, dans lequel le mouvement de rotation et la modification de la distance entre lesdits au moins deux produits de détail (2) se font approximativement de manière simultanée ou dans un intervalle de temps défini, en particulier dans lequel la modification de la distance entre lesdits au moins deux produits de détail (2) et le mouvement de rotation sont couplés.

10. Procédé selon l'une quelconque des revendications 7 à 9, dans lequel lesdits au moins deux produits de détail (2) saisis sont transférées dans une position cible (P) et/ou une orientation cible relative(s) définie(s) qui est décalée latéralement par rapport à un alignement des produits de détail (2) suivant dans une formation fermée (F).

11. Procédé selon l'une quelconque des revendications 7 à 10, dans lequel des produits de détail (2) sont transportés en n rangées (1) dans une direction de transport (TR), dans lequel un nombre d'au moins n+1 produits de détail (2) est saisi dans chacune des n rangées (1) et est transféré en un agencement d'au moins n+1 rangées d'évacuation (7) de produits de détail (2).

12. Procédé selon l'une quelconque des revendications 7 à 11, dans lequel des produits de détail (2) sont transportés en n rangées (1) dans une direction de transport (TR), dans lequel un nombre de n-1 produits de détail (2) au maximum est saisi dans chacune des n rangées (1) et est transféré en un agencement de n-1 rangées d'évacuation (7) au maximum de produits de détail (2), le nombre de n-1 rangées d'évacuation (7) au maximum étant ≥ 1.
